(19) Europäisches Patentamt
European Patent Office
Office européen des brevets

(11) **EP 4 729 640 A1**

(12) **EUROPEAN PATENT APPLICATION**
published in accordance with Art. 153(4) EPC

(43) Date of publication:
**22.04.2026 Bulletin 2026/17**

(21) Application number: **24831886.7**

(22) Date of filing: **24.06.2024**

(51) International Patent Classification (IPC):
*C21D 9/46* (2006.01)    *C21D 8/12* (2026.01)
*C22C 38/00* (2006.01)    *C22C 38/60* (2006.01)
*H01F 1/16* (2006.01)    *H01F 1/147* (2006.01)

(52) Cooperative Patent Classification (CPC):
**C21D 8/12; C21D 9/46; C22C 38/00; C22C 38/60;
H01F 1/147; H01F 1/16**

(86) International application number:
**PCT/JP2024/022732**

(87) International publication number:
**WO 2025/005025 (02.01.2025 Gazette 2025/01)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.06.2023 JP 2023107261**

(71) Applicant: **JFE Steel Corporation
Tokyo, 100-0011 (JP)**

(72) Inventors:
• **SHIMOYAMA Yusuke
Tokyo 100-0011 (JP)**
• **SHINGAKI Yukihiro
Tokyo 100-0011 (JP)**
• **TERASHIMA Takashi
Tokyo 100-0011 (JP)**

(74) Representative: **Hoffmann Eitle
Patent- und Rechtsanwälte PartmbB
Arabellastraße 30
81925 München (DE)**

(54) **METHOD FOR PRODUCING GRAIN-ORIENTED ELECTRICAL STEEL SHEET, AND INDUCTION HEATING DEVICE**

(57)    Proposed is a method for producing a grain-oriented electrical steel sheet having excellent and uniform magnetic properties in the sheet width direction by hot-rolling a steel material to form a hot-rolled sheet, subjecting the hot-rolled sheet to cold rolling to have a final thickness, and subjecting the cold-rolled sheet to decarburization annealing serving also as primary recrystallization annealing, followed by finishing annealing to induce secondary recrystallization, in which a final cold-rolling step of the cold rolling includes performing at least one rolling pass or more with the steel sheet temperature in the range of 150°C to 350°C inclusive, and in the decarburization annealing, the average heating rate T (°C/s) in the temperature range of 500°C to 700° during heating is set at 250°C/s or greater, and the period for reduced heating rate to 150°C/s or less in the temperature range of 500°C to 700°C is set in accordance with the value of x/w (where x represents the distance (mm) from the center in the sheet width direction, and w represents 1/2 of the sheet width (mm)) at each position in the sheet width direction. Also provided is an induction heating device for use in the decarburization annealing of the method.

Fig. 1

**Description**

Technical Field

The present invention relates to a method for producing a grain-oriented electrical steel sheet, and an induction heating device for use in decarburization annealing of the production method.

Background Art

A grain-oriented electrical steel sheet is a soft magnetic material that is mainly used as an iron core material of a transformer or a generator, etc., and is a steel sheet with excellent magnetic properties including low iron loss and high magnetic flux density as it has a crystal structure in which the {110}<001> orientation (i.e., Goss orientation), which corresponds to the magnetic easy axis of iron, is highly aligned along the rolling direction of the steel sheet.

Methods for further reducing iron loss of grain-oriented electrical steel sheets include promoting a high degree of crystal grain alignment in the Goss orientation, following secondary recrystallization annealing. To increase the alignment degree of secondary recrystallized grains in the Goss orientation, it is important to form a large number of Goss-oriented grains in the steel sheet texture at the completion of primary recrystallization, and to introduce a difference in grain boundary mobility to preferentially promote the growth of sharp Goss-oriented grains during secondary recrystallization, in other words, to optimize the steel sheet texture after primary recrystallization.

Examples of primary recrystallization textures that promote the preferential growth of sharp Goss-oriented grains include {111}<112> oriented grains and {411}<148> oriented grains. Ensuring that these grains are present in a primary recrystallization texture in a good balance and with high frequency facilitates strong alignment of Goss-oriented grains in the rolling direction during secondary recrystallization annealing.

As a method for increasing the fraction of Goss-oriented grains in a primary recrystallization texture, for example, Patent Literature 1 discloses a method of performing aging treatment by applying heat treatment at a low temperature to a cold-rolled sheet during cold rolling. Patent Literature 2 discloses a method in which the cooling rate is set to 30°C/s or greater during either hot-rolled sheet annealing or intermediate annealing (final cold rolling) performed prior to cold rolling to obtain the final thickness, and in which in-pass aging is performed two or more times by holding the steel sheet at a temperature of 150 to 300°C for 2 minutes or longer during the final cold-rolling. Patent Literature 3 discloses a method involving performing warm rolling by raising the temperature of the steel sheet during cold rolling.

The methods of Patent Literatures 1 to 3 are each aimed to increase the temperature of a steel sheet to an appropriate level before or during cold rolling, or between consecutive passes of cold rolling. This promotes the diffusion of dissolved elements, such as carbon (C) and nitrogen (N), to pin dislocations introduced by cold rolling and thereby suppress the migration of the dislocations during the following rolling process, so as to promote the shear deformation and thus improve the rolled texture. This is based on the view that the nuclei of Goss-oriented grains in a primary recrystallization texture appear from shear bands introduced into a processed texture having a {111}<112> orientation. Applying these methods can introduce a large number of shear bands into the {111}<112> processed texture and thereby form a large number of Goss-oriented grains in the primary recrystallization texture.

Increasing the heating rate of a steel sheet during heating in decarburization annealing also promotes the formation of Goss-oriented grains in a primary recrystallization texture. For example, Patent Literature 4 discloses a method involving rapidly heating a steel sheet during heating in decarburization annealing. This method is aimed to suppress the development of a $\gamma$-fiber texture ({111}//ND), which is preferentially formed at a regular heating rate. This can be achieved by heating a steel sheet from the room temperature to a temperature around the recrystallization temperature in a short time using electric heating, induction heating, etc., promoting the generation of Goss-oriented grains as the nuclei of secondary recrystallized grains.

Patent Literature 5 discloses a method that involves rapidly heating a steel sheet at an average heating rate of 50°C/s or greater in the temperature range of 550 to 700°C during a heating process of decarburization annealing and also maintaining the heating rate of 10°C/s or less for 1 to 10 seconds within a selected temperature range between 250 and 550°C. The method is aimed at promoting the recovery of the {111} processed texture by holding the steel sheet in the recovery temperature range of 250 to 550°C for a short time and thereby suppressing recrystallization to increase the relative fraction of Goss-oriented grains.

Citation List

Patent Literature

Patent Literature 1: JP-A-S50-016610
Patent Literature 2: JP-A-H08-253816
Patent Literature 3: JP-A-H01-215925
Patent Literature 4: JP-A-H04-160114
Patent Literature 5: JP-A-2014-152393

Summary of Invention

Technical Problem

The primary recrystallization texture of a steel sheet is often not uniform across the sheet width direction. This is considered to be due to factors such as uneven rolling reduction during cold rolling caused by edge drops formed in hot rolling, or non-uniform heating across the sheet width during hot-rolled sheet annealing and the like, resulting in uneven crystal grain sizes across the sheet width before cold rolling. In addition, when warm rolling is applied as the cold rolling as in the methods disclosed in Patent Literatures 1 to 3 above, a large temperature drop occurs at edge portions of the steel sheet due to heat radiation, varying the diffusion distance of carbon and nitrogen in the sheet width direction. This is also considered to be a cause of a change in the texture.

If the primary recrystallization texture varies across the sheet width, the secondary recrystallization behavior will also vary accordingly, leading to variation in the magnetic properties of the final product across the sheet width.. To prevent this, trimming the edge portions of the steel sheet after hot rolling or cold rolling may be effective. However, this approach would inevitably reduce yield.

The present invention has been made in view of the foregoing problems of the conventional methods, and it is an object of the present invention to propose a method for producing a grain-oriented electrical steel sheet having magnetic properties having excellent and uniform magnetic properties in the sheet width direction, and an induction heating device for decarburization annealing for use in such a production method.

Solution to Problem

To address the above problems, the inventors conducted focused studies on methods for achieving a uniform primary recrystallization texture across the sheet width. As a result, the inventors discovered that such uniform primary recrystallization texture after decarburization annealing across the sheet width can be obtained by: performing at least one rolling pass at a steel sheet temperature of 150 °C or higher during final cold rolling; temporarily reducing the heating rate within the temperature range of 500 °C to 700 °C during rapid heating in decarburization annealing serving also as primary recrystallization annealing; and varying the period for the reduced heating rate across the sheet width.

The present invention based on the foregoing findings proposes a method for producing a grain-oriented electrical steel sheet, including

hot-rolling a steel material to form a hot-rolled sheet;
subjecting the hot-rolled sheet to cold rolling including a single cold rolling step or two or more cold rolling steps with intermediate annealing interposed between each rolling step, to form a cold-rolled sheet with a final thickness; and subjecting the cold-rolled sheet to decarburization annealing also serving as primary recrystallization annealing, followed by finishing annealing to induce secondary recrystallization, characterized in that
a final cold-rolling step, conducted in either the single cold-rolling step or among two or more cold-rolling steps, involves at least one rolling pass at a steel sheet temperature within a range of 150°C to 350°C inclusive;
in the decarburization annealing, an average heating rate T (°C/s) is 250°C/s or greater within a temperature range of 500°C to 700° during heating, and within a selected temperature range between 500°C and 700°, a heating rate at each position across the sheet width is reduced to 150°C/s or less for a period t (s) that satisfies Expression (1) below, in accordance with a value of x/w of the position:

$$200/T \times 0.2(1\text{-}x/w) \leq t \leq 200/T \times 0.8(1\text{-}x/w) \ ...(1),$$

provided that x represents a distance (mm) from a center in the sheet width direction, and w represents 1/2 of the sheet width (mm), where $0 \leq x \leq 0.9w$.

In the foregoing method for producing a grain-oriented electrical steel sheet of the present invention, the final cold-rolling step involves performing at least one rolling pass within a temperature range of 30°C to 130°C inclusive, followed by at least one rolling pass within a temperature range of 150°C to 350°C inclusive.

The steel material used for the method for producing a grain-oriented electrical steel sheet of the present invention has a composition of components including C: 0.01 to 0.10 mass%, Si: 2.0 to 4.5 mass%, Mn: 0.01 to 0.50 mass%, Al: 0.0100 to 0.0400 mass%, and N: 0.0050 to 0.0120 mass%, and further including at least one of S and Se in a total amount of 0.01 to 0.05 mass%, with a balance being Fe and unavoidable impurities.

The steel material used for the foregoing method for producing a grain-oriented electrical steel sheet of the present invention has a composition of components including C: 0.01 to 0.10 mass%, Si: 2.0 to 4.5 mass%, Mn: 0.01 to 0.50 mass%, Al: less than 0.0100 mass%, N: 0.0050 mass% or less, S: less than 0.0100 mass%, and Se: less than 0.0100 mass%, with a balance being Fe and unavoidable impurities.

The steel material used for the foregoing method for producing a grain-oriented electrical steel sheet of the present invention further includes, in addition to the composition of components, at least one component selected from the group consisting of Sb: 0.005 to 0.500 mass%, Cu: 0.01 to 1.50 mass%, P: 0.005 to 0.500 mass%, Cr: 0.01 to 1.50 mass%, Ni: 0.005 to 1.500 mass%, Sn: 0.01 to 0.50 mass%, Nb: 0.0005 to 0.0100 mass%, Mo: 0.01 to 0.50 mass%, B: 0.0010 to 0.0070 mass%, and Bi: 0.0005 to 0.0500 mass%.

In the foregoing method for producing a grain-oriented electrical steel sheet of the present invention, rapid heating in the decarburization annealing is performed using a transverse induction heating device.

The present invention also provides a transverse induction heating device for use in rapid heating of the decarburization annealing in the foregoing method for producing a grain-oriented electrical steel sheet.

Advantageous Effects of Invention

According to the present invention, it is possible to stably produce a grain-oriented electrical steel sheet having magnetic properties that are excellent and uniform in the sheet width direction, which greatly contributes to improving the quality of a product sheet and increasing yields.

Brief Description of Drawings

[Fig. 1] is a graph illustrating the period during which the heating rate was reduced in the sheet width direction, in accordance with the present invention.
[Fig. 2] is another graph illustrating the period during which the heating rate was reduced in the sheet width direction, in accordance with the present invention.
[Fig. 3] is a schematic view illustrating a transverse induction heating device.

Description of Embodiments

First, that experiments that led to the development of the present invention will be described.

<Experiment 1>

A steel slab having a composition of components including C: 0.033 mass%, Si: 3.4 mass%, Mn: 0.07 mass%, sol.Al: 0.0081 mass%, N: 0.0052 mass%, S: 0.0030 mass%, and Se: 0.0030 mass%, with the balance being Fe and unavoidable impurities was heated to 1220°C, and hot-rolled to form a hot-rolled sheet with a thickness of 2.0 mm. The hot-rolled sheet was subjected to hot-rolled sheet annealing at 1000°C for 60 seconds and then cold rolling once to produce a cold-rolled sheet with a final thickness of 0.20 mm. Warm rolling was adopted for cold rolling, in which the steel sheet temperature immediately before the roll bite was increased to 200 °C using induction heating. Next, a sample material was taken from the cold-rolled sheet, and a plurality of samples each having the size of an Epstein test piece (a width of 30 mm $\times$ a length of 280 mm) were taken at five positions of x=0, 0.2w, 0.4w, 0.6w, and 0.8w of the sample material in the sheet width direction, provided that the distance from the center in the sheet width direction is represented by x (mm) (where the center in the sheet width direction is x = 0), and 1/2 of the sheet width is represented by w (mm).

Subsequently, each sample was subjected to decarburization annealing serving also as primary recrystallization annealing at a soaking temperature of 850°C for a soaking time of 100 seconds. During heating of the decarburization annealing, the average heating rate within the temperature range of 500°C to 700°C was set to 300°C/s. When the sample temperature reached 600°C under certain conditions, the heating rate was reduced to 120°C/s for the period indicated in Table 1. Next, an annealing separating agent mainly composed of MgO was applied to the surface of the sample after decarburization annealing, followed by finishing annealing to induce secondary recrystallization. After the finishing annealing, an insulation coating solution containing phosphate, chromate, and colloidal silica in a mass ratio of 3:1:2 was applied to the surface of the sample, and heat treatment simulating flattening annealing was performed at 800°C for 30 seconds to bake the coating, thereby producing a product sheet sample. Note that the average heating rate of 300°C/s within the temperature range of 500°C to 700°C refers to the average heating rate over the duration excluding the period during which the heating rate was being reduced.

For each product sheet sample sized according to the Epstein test piece and prepared as described above, the iron loss $W_{17/50}$ was measured in accordance with JIS Z 2550. The difference between the maximum value and the minimum value of the iron loss values in the sheet width direction was determined. The results are shown in Table 1.

[Table 1]

| Conditions | Period(s) for reduced heating rate | | | | | Difference (W/kg) between maximum and minimum values of iron loss $W_{17/50}$ in sheet width direction | Remarks |
|---|---|---|---|---|---|---|---|
| | x= 0 | x=0.2w | x=0.4w | x=0.6w | x=0.8w | | |
| 1 | 0.00 | 0.00 | 0.00 | 0.00 | 0.00 | 0.07 | Comparative Example |
| 2 | 0.10 | 0.10 | 0.10 | 0.10 | 0.10 | 0.08 | Comparative Example |
| 3 | 0.30 | 0.30 | 0.30 | 0.30 | 0.30 | 0.09 | Comparative Example |
| 4 | 0.50 | 0.50 | 0.50 | 0.50 | 0.50 | 0.07 | Comparative Example |
| 5 | 0.10 | 0.20 | 0.30 | 0.40 | 0.50 | 0.11 | Comparative Example |
| 6 | 0.20 | 0.40 | 0.00 | 0.30 | 0.20 | 0.08 | Comparative Example |
| 7 | 0.50 | 0.40 | 0.30 | 0.20 | 0.10 | 0.04 | Invention Example |
| 8 | 0.30 | 0.30 | 0.20 | 0.10 | 0.05 | 0.03 | Invention Example |
| 9 | 0.40 | 0.30 | 0.20 | 0.15 | 0.10 | 0.03 | Invention Example |

Table 1 demonstrates that, under conditions where a period for temporarily reduced heating rate was provided during rapid heating within the temperature range of 500 to 700 °C and the duration of said period was set to be longer at a central portion in the sheet width direction and shorter at the edge portions thereof, the difference between the maximum and minimum iron loss values in the sheet width direction was 0.04 W/kg or less. Accordingly, magnetic properties substantially uniform across the sheet width direction were obtained.

The present inventors consider the following as the reason why magnetic properties were uniform in the sheet width direction under conditions in which the period for temporarily reduced heating rate during rapid heating was set to be longer at the central portion and shorter at the edge portions in the sheet width direction.

The cold rolling reduction at the edge portions in the sheet width direction is smaller than that at the central portion, due to edge drops caused during hot rolling or the like. Accordingly, the amount of deformation during cold rolling is smaller at the edge portions in the sheet width direction. Furthermore, the temperature of the steel sheet during cold rolling tends to be lower at the edge portions in the sheet width direction than at the central portion, due to heat radiation. This results in a shorter diffusion distance of carbon and nitrogen in the steel at the edge portions in the sheet width direction, making it difficult to pin dislocations formed during rolling. Consequently, the cold-rolled microstructure at the edge portions in the sheet width direction contains a smaller amount of introduced shear bands, which serve as sites for the formation of Goss-oriented grains during primary recrystallization, compared to the central portion in the sheet width direction. Therefore, the recrystallization of Goss-oriented grains is promoted at the edge portions in the sheet width direction by shortening the period for the reduced heating rate, while it is suppressed at the central portion in the sheet width direction by prolonging the said period . Accordingly, it is considered that the number of Goss-oriented grains after primary recrystallization annealing has become made uniform across the sheet width.

Next, based on the experiment results, the inventors conducted an experiment to study the appropriate period for the reduced heating rate in accordance with the position in the sheet width direction.

<Experiment 2>

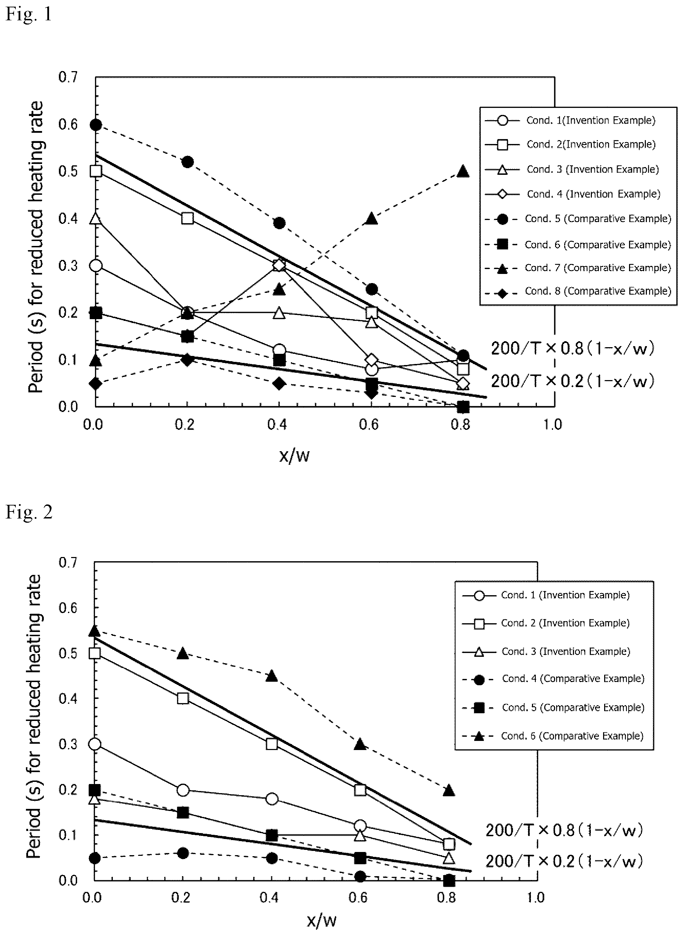

The five types of samples having the size of an Epstein test piece, taken from different positions in the sheet width direction of the cold-rolled sheet obtained in Experiment 1, were subjected to decarburization annealing serving also as primary recrystallization annealing at a soaking temperature of 850°C for a soaking time of 100 seconds. During the heating process of the decarburization annealing, the average heating rate within the temperature range of 500°C to 700°C was set to 300°C/s. When the temperature of each sample reached 650°C, the period during which the heating rate was reduced to 110°C/s at each position in the sheet width direction was varied in eight conditions as shown in Fig. 1. After the decarburization annealing, an annealing separating agent mainly composed of MgO was applied to the surface of the sample, followed by finishing annealing to induce secondary recrystallization. Subsequently, an insulation coating solution containing phosphate, chromate, and colloidal silica in a mass ratio of 3:1:2 was applied to the surface of the sample after finishing annealing, and heat treatment simulating flattening annealing was performed at 800°C for 30 seconds to bake the coating, thereby producing a product sheet sample.

For each product sheet sample having the size of an Epstein test piece thus obtained, the iron loss $W_{17/50}$ was measured according to JIS Z 2550. Table 2 shows the difference between the maximum value and the minimum value of the iron loss values in the sheet width direction.

[Table 2]

| Conditions | Difference (W/kg) between maximum and minimum values of iron loss $W_{17/50}$ in sheet width direction | Remarks |
|---|---|---|
| 1 | 0.03 | Invention Example |
| 2 | 0.02 | Invention Example |
| 3 | 0.02 | Invention Example |
| 4 | 0.03 | Invention Example |
| 5 | 0.08 | Comparative Example |
| 6 | 0.09 | Comparative Example |
| 7 | 0.11 | Comparative Example |
| 8 | 0.07 | Comparative Example |

Table 2 demonstrates that, under conditions in which a period t of reduced heating rate at each of positions x=0, 0.2w, 0.4w, 0.6w, and 0.8w in the sheet width direction satisfies Expression (1) below:

$$200/T \times 0.2(1-x/w) \leq t \leq 200/T \times 0.8(1-x/w) \ ...(1),$$

provided that x represents the distance (mm) from the center in the sheet width direction, and w represents 1/2 of the sheet width (mm), where $0 \leq x \leq 0.9w$. the difference between the maximum and minimum iron loss values in the sheet width direction was 0.04 W/kg or less. Accordingly, magnetic properties uniform across the sheet width direction were obtained.

The present invention has been completed by adding further consideration to the foregoing new findings.

The component composition of a steel material (slab) used for producing a grain-oriented electrical steel sheet according to the present invention is described. It should be noted that conventionally known steel materials used in the production of grain-oriented electrical steel sheets may also be employed in the present invention. However, from the viewpoint of achieving superior magnetic properties, a steel material having the following composition is preferably used.

C: 0.01 to 0.10 mass%

C is precipitated as fine carbide particles and thereby contributes to improving a primary recrystallization texture. However, if the content of C falls below 0.01 mass%, the precipitation amount of fine carbide particles is insufficient, and the effect of improving the texture may not be fully obtained. Meanwhile, if the content of C exceeds 0.10 mass%, it may be difficult to reduce the content of C to 0.0050 mass% or less, with which no magnetic aging occurs during decarburization annealing. Accordingly, the content of C should be set within the range of 0.01 to 0.10 mass% inclusive. Preferably, the content of C should be set within the range of 0.015 to 0.08 mass% inclusive.

Si: 2.0 to 4.5 mass%

Si is an element effective in increasing the specific resistance of steel and thereby improving iron loss properties. However, if the content of Si is less than 2.0 mass%, the effect of reducing iron loss cannot be fully obtained. Meanwhile, the content of Si exceeding 4.5 mass% significantly deteriorates workability, making it difficult to produce a steel sheet by rolling. Accordingly, the content of Si should be set in the range of 2.0 to 4.5 mass% inclusive. Preferably, it should be set in the range of 2.5 to 4.0 mass% inclusive.

Mn: 0.01 to 0.50 mass%

Mn is an element essential for improving hot workability. If the content of Mn is less than 0.01 mass%, the effect of improving hot workability can hardly be obtained. Meanwhile, the content of Mn exceeding 0.50 mass% may deteriorate primary recrystallization texture, making it difficult to obtain secondary recrystallized grains with highly aligned Goss-oriented grains. Accordingly, the content of Mn should be set in the range of 0.01 to 0.50 mass% inclusive. Preferably, it should be in the range of 0.03 to 0.45 mass% inclusive.

Components other than C, Si, and Mn described above vary depending on whether an inhibitor is used for secondary recrystallization.

Specifically, when an inhibitor is used for secondary recrystallization and AlN is employed as the inhibitor, the steel material should contain Al and N in the range of Al: 0.0100 to 0.0400 mass% inclusive and N: 0.0050 to 0.0120 mass% inclusive in addition to C, Si, and Mn described above. If each of the content of Al and the content of N falls below its lower limit, it becomes difficult to achieve an intended effect of the inhibitor. Meanwhile, if each of the content of Al and the content of N exceeds its upper limit, the precipitates may be unevenly dispersed, which also hinders the predetermined effect of the inhibitor.

Furthermore, when sulfide (e.g., MnS or $Cu_2S$) and/or selenide (e.g., MnSe or $Cu_2Se$) are/is used as inhibitors in addition to AlN described above, at least one of S and Se should be contained in a total amount of 0.0100 to 0.0500 mass%, as inhibitor-forming components, along with Al and N. If the total content of S and Se falls below its lower limit described above, it becomes difficult to fully achieve the effect of the inhibitor. Meanwhile, if the total content of S and Se exceeds its upper limit described above, precipitates are unevenly dispersed, which also hinders the effect of inhibitors. It should be noted that sulfide and selenide described above may undergo complex precipitation.

Meanwhile, when no inhibitor is used for secondary recrystallization, the inhibitor-forming components should be minimized. Specifically, the following ranges are preferable: Al: less than 0.0100 mass%, N: 0.0050 mass% or less, S: less than 0.0100 mass%, and Se: less than 0.0100 mass%.

The steel material used in the production of a grain-oriented electrical steel sheet according to the present invention has the aforementioned basic component composition, with the balance being substantially Fe and unavoidable impurities. However, in order to enhance magnetic properties, the steel material may further contain, in addition to the aforementioned components, at least one element selected from the group consisting of Sb: 0.005 to 0.500 mass%, Cu: 0.01 to 1.50 mass%, P: 0.005 to 0.500 mass%, Cr: 0.01 to 1.50 mass%, Ni: 0.005 to 1.500 mass%, Sn: 0.01 to 0.50 mass%, Nb: 0.0005 to 0.0100 mass%, Mo: 0.01 to 0.50 mass%, B: 0.0010 to 0.0070 mass%, and Bi: 0.0005 to 0.0500 mass%. Each of Sb, Cu, P, Cr, Ni, Sn, Nb, Mo, B, and Bi is effective in improving magnetic properties. When present within the aforementioned ranges, these components achieve the effect of improving magnetic properties without hindering the development of secondary recrystallized grains.

Next, a method for producing a grain-oriented electrical steel sheet according to the present invention will be described.

A steel material (slab) used in the production of a grain-oriented electrical steel sheet according to the present invention is preferably prepared by subjecting molten steel, obtained in a converter, an electric furnace, or the like, to a commonly known refining process involving secondary refining such as vacuum degassing, to form steel having the aforementioned composition of components, followed by a commonly known continuous casting process or ingot making-blooming process.

Next, the steel material (slab) is heated to a predetermined temperature and then hot-rolled to form a hot-rolled sheet. The slab heating temperature is preferably set approximately at 1050°C or higher to ensure hot rollability. The upper limit of the heating temperature is not limited to a particular value. However, if the heating temperature exceeds 1450°C, it approaches the melting temperature of the steel, making it difficult to maintain the shape of the slab. Therefore, the heating temperature is preferably set at 1450°C or lower.

The hot rolling following the slab heating may be performed under commonly known conditions, which are not particularly limited.

Next, the hot-rolled steel sheet (hot-rolled sheet) may be subjected to hot-rolled sheet annealing as appropriate. Note that when hot-rolled sheet annealing is performed, commonly known conditions may be applied, and the conditions are not limited to particular conditions.

The hot-rolled steel sheet or the hot-rolled-annealed steel sheet is descaled as appropriate by pickling, a mechanical method, or the like and cold-rolled to form a cold-rolled sheet with a final thickness (thickness of the product sheet). The cold rolling may consist of a single cold-rolling step to obtain a cold-rolled sheet with a final thickness, or two or more cold-rolling steps with intermediate annealing interposed between each step, to obtain a cold-rolled sheet with a final thickness. It should be noted that the final thickness preferably falls within the range of 0.1 mm to 1.0 mm inclusive.

The rolling reduction in the final cold-rolling step preferably falls within the range of 60% to 95%, inclusive. The term 'final cold-rolling step' refers to the cold-rolling step performed last, whether in a single cold-rolling step or in two or more cold-rolling steps. In cases where cold rolling is performed only once, that step corresponds to the final cold-rolling step. In cases where two or more cold-rolling steps are performed, the cold-rolling step conducted last corresponds to the final cold-rolling step.

Herein, in the present invention, it is necessary to perform at least one rolling pass at a rolling temperature of 150°C to 350°C inclusive during the final cold-rolling step. Performing one or more cold-rolling passes at this temperature can promote the diffusion of dissolved carbon as well as the pinning of dislocations, which can efficiently introduce shear bands as the sites for forming the nuclei of Goss-oriented grains during primary recrystallization, further improving magnetic properties. If the rolling temperature falls below 150°C, the dissolved carbon fails to sufficiently pin dislocations, thereby suppressing the formation of Goss-oriented grains during primary recrystallization. Meanwhile, if the rolling temperature exceeds 350°C, the lubrication state significantly degrades due to the evaporation of lubricant oil used for lubrication, for example. The rolling temperature should fall within in the range of 180°C to 300°C inclusive. It should be noted that the rolling temperature refers to the temperature of the steel sheet immediately before a roll bite.

The effect of increasing Goss-oriented grains during primary recrystallization can be further enhanced by performing, in the final cold-rolling step, at least one rolling pass at a rolling temperature within the low temperature range of 30°C to 130°C inclusive, and at least one rolling pass within the high temperature range of 150°C to 350°C inclusive. The {111}<112> orientation is stable during rolling, meaning that this orientation undergoes minimal change through the rolling process. A {111}<112> orientation is stable during rolling, in which an orientation hardly changes by rolling. Therefore, shear bands, which serve as nucleation sites for Goss-oriented grains in the {111}<112> processed microstructure during primary recrystallization, can be efficiently increased by first performing rolling in the low temperature range to develop the {111}<112> orientation, followed by rolling in the high temperature range. If the rolling temperature in the low temperature range is below 30°C, sheet cracking may occur, significantly reducing productivity. Conversely, if the rolling temperature exceeds 130°C, the {111}<112> microstructure is diminished. Therefore, the preferred rolling temperature in the low temperature range is from 40°C to 100°C inclusive.

When the final cold-rolling step involves three or more passes, the positions of the rolling pass in the low temperature range and the rolling pass in the high temperature range are not limited to specific sequences, provided that the rolling in the high temperature range is performed after the rolling in the low temperature range. For example, when the final cold-rolling step involves three passes, provided that rolling performed in the low temperature range of 30°C to 130°C inclusive is expressed as "low temperature range" and that rolling performed in the high temperature range of 150°C to 350°C inclusive is expressed as "high temperature range," rolling may be performed in any of the following sequences: low temperature range - high temperature range - high temperature range; high temperature range - low temperature range - high temperature range; low temperature range - low temperature range - high temperature range; and low temperature range - high temperature range - low temperature range. However, the effect of increasing Goss-oriented grains is unlikely to be achieved, if rolling is performed in the following sequences: high temperature range - low temperature range - low temperature range; or high temperature range - high temperature range - low temperature range.

Next, the cold-rolled sheet with the final thickness is subjected to decarburization annealing serving also as primary recrystallization annealing. The decarburization conditions (conditions at soaking) of the decarburization annealing are not limited to particular conditions, and known conditions may be applied. For example, such conditions of 720 to 870°C for 60 to 150 seconds in a wet hydrogen atmosphere are preferably. This decarburization annealing can reduce the content of C in the steel sheet to 0.0050 mass% or less, at which magnetic aging is unlikely to occur.

Herein, it is important to perform rapid heating at an average heating rate of 250°C/s or greater within the temperature range of 500°C to 700°C during the heating process of the decarburization annealing, until the soaking temperature is reached. In the present invention, the average heating rate within the temperature range of 500°C to 700°C refers to the average heating rate over the time, excluding the period during which the heating rate was being temporarily reduced, which will be described later. If the average heating rate is less than 250°C/s, sufficient Goss-oriented grains are not formed after primary recrystallization, making it unlikely to achieve favorable iron loss. The preferable average heating rate is 300°C/s or greater. It should be noted that rapid heating may be performed in a range other than the temperature range of 500°C to 700°C.

In the heating process of the decarburization annealing, it is necessary to provide a period during which the heating rate is temporarily reduced to 150°C/s or less within a selected temperature range between 500 and 700°C during the rapid heating. If the temperature of the steel sheet at which the heating rate is reduced is below 500°C, the recrystallization behavior of Goss-oriented grains is unlikely to change, even with a decreased heating rate. As a result, the effect of adjusting the number of Goss-oriented grains through primary recrystallization cannot be obtained. Meanwhile, if the steel sheet temperature at which the heating rate is reduced exceeds 700°C, recrystallization is already complete by that time. Therefore, the effect of adjusting the number of Goss-oriented grains through primary recrystallization cannot be achieved.

Furthermore, in the present invention, it is necessary to vary the period during which the heating rate is temporarily reduced, in accordance with the position in the sheet width direction. The present invention relates to a method for eliminating variation in the microstructure of a steel sheet in the sheet width direction, which occurred due to various production conditions of processes prior to decarburization annealing, by varying the period for temporarily decreasing the heating rate in accordance with a position in the sheet width direction during rapid heating of the decarburization annealing to cause uniform recrystallization of Goss-oriented grains in the sheet width direction in primary recrystallization. In particular, when warm rolling is adopted for the final cold-rolling step, temperature variation in the sheet width direction occurs, and a primary recrystallization texture is thus likely to become non-uniform in the sheet width direction. Accordingly, the present method is preferably applied when warm rolling is performed.

The period t of temporarily reduced heating rate to 150°C/s or less during the rapid heating is set longer on the side of the central portion in the sheet width direction and shorter on edge portions in the sheet width direction. Specifically, it is important to vary the period t so as to satisfy Expression (1) below:

$$200/\mathrm{T} \times 0.2(1\text{-}x/w) \le t \le 200/\mathrm{T} \times 0.8(1\text{-}x/w) \,...(1),$$

provided that x represents the distance (mm) from the center in the sheet width direction, and w represents 1/2 of the sheet width (mm), where $0 \le x \le 0.9w$.

If t is shorter than the left-hand side of Expression (1) above, the number of corresponding Goss-oriented grains increases excessively, so that the iron loss properties are partially degrade. Conversely, if t is longer than the right-hand side of Expression (1) above, the recrystallization of Goss-oriented grains is suppressed correspondingly, so that iron loss properties partially increase. Consequently, it becomes impossible to obtain magnetic properties uniform in the sheet width direction. The reason the range of the sheet width that satisfies Expression (1) above is set to $(0 \le x \le 0.9w)$ is that, when transverse induction heating is used for rapid heating, an induced current tends to concentrate at the edge portions in the sheet width direction, which may make it difficult to satisfy Expression (1) across the full width. Needless to say, it is preferable for Expression (1) to be satisfied across the entire sheet width.

The temporarily reduced heating rate needs to be 150°C/s or less. If the temporarily reduced heating rate exceeds this value, the effect of suppressing the recrystallization of Goss-oriented grains cannot be sufficiently achieved. It should be noted that the lower limit of the reduced heating rate is not limited to a particular value, but is preferably 10°C/s or greater. The period for the temporarily reduced heating rate can be determined by measuring the steel sheet temperature during the heating process, using a thermocouple, for example, and then calculating the temporal derivative of the temperature over time.

Herein, the rapid heating performed during the heating process of the decarburization annealing as well as reduction in the heating rate during the rapid heating can be achieved by arranging two or more rapid heating devices, such as electric heating devices or solenoid induction heating devices, in series in the threading direction of the steel sheet. The heating rate can be reduced in the section between any two of these devices, and further adjusted by appropriately controlling the outputs of the heating devices and the threading speed (line speed) of the steel sheet. In addition, an edge heater and the like may be provided in the section where the heating rate is decreased, from the perspective of preventing heat radiation at the edge portions in the sheet width direction.

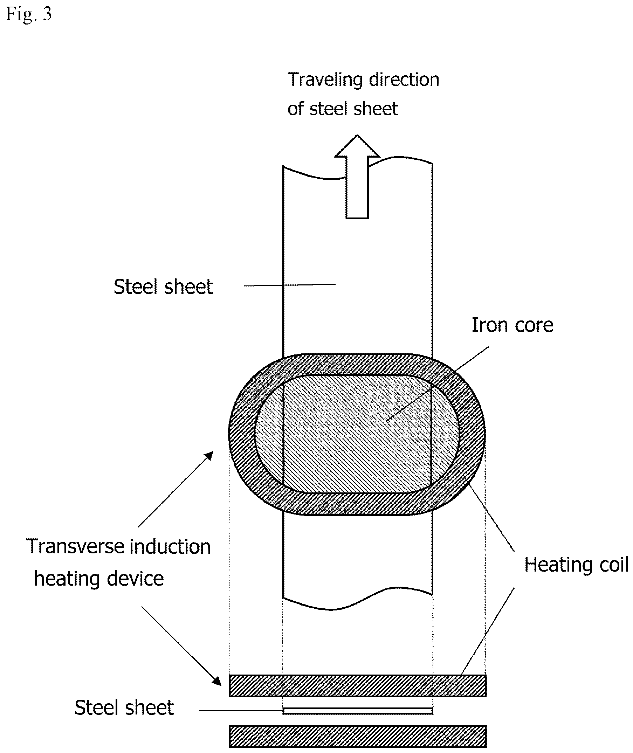

Arranging two or more rapid heating devices in series, as described above, presents challenges in terms of cost and space. However, as schematically illustrated in Fig. 3, when using a transverse induction heating device as the rapid heating device, where heating coils wound around an iron core are arranged above and below the steel sheet, an alternating magnetic flux generated within the iron core penetrates the steel sheet in the thickness direction, heating it through the action of the magnetic field. In this configuration, the induced current flows across the sheet plane following the shape of the heating coils, rather than through the portions of the steel sheet directly facing the iron core. Accordingly, when the steel sheet passes in the vicinity of the iron core, the heating rate temporarily decreases. This phenomenon may be utilized to intentionally reduce the heating rate. In addition, the period for the reduced heating rate can be adjusted by controlling the output of the induction heating device, the line speed, or the like. Further, an induced current flows through the edge portions in the sheet width direction, where heat radiation can be suppressed. Furthermore, since the decrease in heating rate occurs within a single induction heating device, there is no concern regarding installation space. Accordingly, a transverse induction heating device is preferably employed in the present invention.

To vary the period for the reduced heating rate in accordance with a position in the sheet width direction when using the transverse induction heating device, the coil diameter may be set larger at the central portion in the sheet width direction and sequentially reduced toward the steel width edge portions. The shape of the heating coil of the transverse induction heating device may be round, quadrangular, or elliptical shapes, for example. However, as described above, the coil diameter in the threading direction is preferably varied across the sheet width.

Thereafter, an annealing separating agent is applied to the surface of the cold-rolled steel sheet after the decarburization annealing, followed by finishing annealing to induce secondary recrystallization. The annealing separating agent can may be any known type and is not limited to a particular one. Examples of the annealing separating agent include an agent mainly composed of MgO and also containing an auxiliary agent such as $TiO_2$, as appropriate, and an agent mainly composed of $SiO_2$ or $Al_2O_3$.

Unreacted portions of the annealing separating agent remaining on the surface of the steel sheet surface after the finishing annealing, are removed. Thereafter, it is preferable to apply an insulation coating solution to the surface of the steel sheet, followed by flattening annealing to simultaneously bake the coating and correct the shape of the steel sheet, which may have been deformed during finishing annealing, thereby obtaining a product sheet. It should be noted that the insulation coating may be formed through a different line. The type of the insulation coating is not limited to a particular type. However, to form a tension-imparting insulation coating, which imparts tension to the surface of the steel sheet, it is preferable to apply slurry containing phosphate and colloidal silica to the surface of the steel sheet and then bake the slurry at a temperature of about 800°C as disclosed in Japanese Patent Laid-Open No. 50-79442, Japanese Patent Laid-Open No. 48-39338, Japanese Patent Laid-Open No. 56-75579, and the like.

When a further reduction of iron loss is desired, magnetic domain subdividing treatment may be performed using a known method. Such methods include forming grooves in the surface of the steel sheet during any of the process following the cold rolling, mechanically introducing strain regions into the surface, or creating thermal strain regions by irradiating the surface with a laser beam or an electron beam, for example, after finishing annealing.

Example 1

A Steel slab having a composition of components including C: 0.035 mass%, Si: 3.3 mass%, Mn: 0.05 mass%, sol. Al: 0.0084 mass%, N: 0.0051 mass%, S: 0.0031 mass%, and Se: 0.0031 mass%, with the balance being Fe and unavoidable impurities was heated to 1260°C and then hot-rolled to form a hot-rolled sheet with a thickness of 2.0 mm. The hot-rolled sheet was subjected to hot-rolled sheet annealing at 1000°C for 60 seconds, followed by cold rolling once to form a cold-rolled sheet with a final thickness of 0.20 mm. The cold rolling was warm rolling, in which the steel sheet is heated to a temperature of 250°C by induction heating.

Thereafter, the cold-rolled sheet was subjected to decarburization annealing serving also as primary recrystallization annealing, at a soaking temperature of 850°C for a soaking time of 100 seconds. During a heating process of the decarburization annealing, the average heating rate T (°C/s) was varied in the temperature range from 500°C to 700°C, as shown in Table 3. For certain steel sheets, when the temperature of the steel sheet reached 620°C, the heating rate at each position in the sheet width direction was reduced for a period t, defined by Expression (2) below, in order to achieve the "reduced heating rate" shown in Table 3:

$$t = 200/T \times 0.5 \times (1-x/w) \ ...(2),$$

provided that x represents the distance (mm) from the center in the sheet width direction, and w represents 1/2 of the sheet width (mm), where $0 \leq x \leq 0.9w$. Thereafter, an annealing separating agent mainly composed of MgO was applied to the surface of the steel sheet after the decarburization annealing, followed by finishing annealing to induce secondary recrystallization. An insulation coating solution containing phosphate, chromate, and colloidal silica in a mass ratio of 3:1:2 was applied to the surface of the steel sheet after the finishing annealing, followed by flattening annealing at 800°C for 30 seconds to bake the coating and thereby obtain a product sheet.

An Epstein test piece having a width of 30 mm and a length of 280 mm was taken from each of the positions x = 0, 0.2w, 0.4w, 0.6w, and 0.8w in the sheet width direction of the product sheet thus obtained, where x represents the distance (mm) from the center in the sheet width direction and w represents half the sheet width (mm). The iron loss $W_{17/50}$ was measured in accordance with JIS Z 2550 to determine both the mean value of the iron loss across the sheet width and the difference between the maximum and minimum values. Table 3 presents the results, demonstrating that under conditions in which the average heating rate is 250 °C/s or greater and the reduced heating rate is 150 °C/s or less, the mean iron loss value is as low as 0.84 W/kg or less, and the variation in iron loss is suppressed to 0.04 W/kg or less.

[Table 3-1]

| Conditions | Heating rate during decarburization annealing | | Iron loss $W_{17/50}$ in sheet width direction | | Remarks |
| --- | --- | --- | --- | --- | --- |
| | Average heating rate (°C/s) from 500°C to 700°C | Reduced heating rate (°C/s) | Mean Value (W/kg) | Difference (W/kg) between maximum and minimum values | |
| 1 | 200 | 50 | 0.91 | 0.03 | Comparative Example |
| 2 | 225 | 50 | 0.88 | 0.01 | Comparative Example |
| 3 | 250 | 50 | 0.80 | 0.02 | Invention Example |
| 4 | 260 | 50 | 0.81 | 0.02 | Invention Example |

(continued)

| Conditions | Heating rate during decarburization annealing | | Iron loss $W_{17/50}$ in sheet width direction | | Remarks |
|---|---|---|---|---|---|
| | Average heating rate (°C/s) from 500°C to 700°C | Reduced heating rate (°C/s) | Mean Value (W/kg) | Difference (W/kg) between maximum and minimum values | |
| 5 | 270 | 50 | 0.80 | 0.04 | Invention Example |
| 6 | 280 | 50 | 0.83 | 0.01 | Invention Example |
| 7 | 290 | 50 | 0.81 | 0.02 | Invention Example |
| 8 | 300 | 50 | 0.80 | 0.02 | Invention Example |
| 9 | 350 | 50 | 0.81 | 0.02 | Invention Example |
| 10 | 400 | 50 | 0.83 | 0.01 | Invention Example |
| 11 | 500 | 50 | 0.79 | 0.03 | Invention Example |
| 12 | 600 | 50 | 0.80 | 0.02 | Invention Example |
| 13 | 200 | 75 | 0.89 | 0.02 | Comparative Example |
| 14 | 225 | 75 | 0.99 | 0.04 | Comparative Example |
| 15 | 250 | 75 | 0.82 | 0.02 | Invention Example |
| 16 | 260 | 75 | 0.81 | 0.04 | Invention Example |
| 17 | 270 | 75 | 0.82 | 0.01 | Invention Example |
| 18 | 280 | 75 | 0.81 | 0.01 | Invention Example |
| 19 | 290 | 75 | 0.81 | 0.03 | Invention Example |
| 20 | 300 | 75 | 0.83 | 0.01 | Invention Example |
| 21 | 350 | 75 | 0.83 | 0.02 | Invention Example |
| 22 | 400 | 75 | 0.80 | 0.03 | Invention Example |
| 23 | 500 | 75 | 0.83 | 0.01 | Invention Example |
| 24 | 600 | 75 | 0.83 | 0.01 | Invention Example |
| 25 | 200 | 100 | 0.96 | 0.04 | Comparative Example |
| 26 | 225 | 100 | 0.91 | 0.02 | Comparative Example |
| 27 | 250 | 100 | 0.82 | 0.01 | Invention Example |
| 28 | 260 | 100 | 0.81 | 0.02 | Invention Example |
| 29 | 270 | 100 | 0.80 | 0.02 | Invention Example |
| 30 | 280 | 100 | 0.83 | 0.01 | Invention Example |
| 31 | 290 | 100 | 0.81 | 0.02 | Invention Example |
| 32 | 300 | 100 | 0.81 | 0.01 | Invention Example |
| 33 | 350 | 100 | 0.83 | 0.03 | Invention Example |
| 34 | 400 | 100 | 0.83 | 0.02 | Invention Example |
| 35 | 500 | 100 | 0.84 | 0.02 | Invention Example |
| 36 | 600 | 100 | 0.82 | 0.02 | Invention Example |
| 37 | 200 | 110 | 0.90 | 0.02 | Comparative Example |
| 38 | 225 | 110 | 1.01 | 0.03 | Comparative Example |
| 39 | 250 | 110 | 0.82 | 0.04 | Invention Example |
| 40 | 260 | 110 | 0.82 | 0.01 | Invention Example |

(continued)

| Conditions | Heating rate during decarburization annealing | | Iron loss $W_{17/50}$ in sheet width direction | | Remarks |
| --- | --- | --- | --- | --- | --- |
| | Average heating rate (°C/s) from 500°C to 700°C | Reduced heating rate (°C/s) | Mean Value (W/kg) | Difference (W/kg) between maximum and minimum values | |
| 41 | 270 | 110 | 0.81 | 0.02 | Invention Example |
| 42 | 280 | 110 | 0.82 | 0.01 | Invention Example |
| 43 | 290 | 110 | 0.84 | 0.04 | Invention Example |
| 44 | 300 | 110 | 0.84 | 0.03 | Invention Example |
| 45 | 350 | 110 | 0.80 | 0.03 | Invention Example |
| 46 | 400 | 110 | 0.83 | 0.01 | Invention Example |
| 47 | 500 | 110 | 0.82 | 0.04 | Invention Example |
| 48 | 600 | 110 | 0.82 | 0.04 | Invention Example |

[Table 3-2]

| Conditions | Heating rate during decarburization annealing | | Iron loss $W_{17/50}$ in sheet width direction | | Remarks |
| --- | --- | --- | --- | --- | --- |
| | Average heating rate (°C/s) from 500 to 700°C | Reduced heating rate (°C/s) | Mean value (W/kg) | Difference (W/kg) between maximum and minimum values | |
| 49 | 200 | 120 | 0.94 | 0.02 | Comparative Example |
| 50 | 225 | 120 | 0.93 | 0.03 | Comparative Example |
| 51 | 250 | 120 | 0.81 | 0.03 | Invention Example |
| 52 | 260 | 120 | 0.80 | 0.01 | Invention Example |
| 53 | 270 | 120 | 0.84 | 0.02 | Invention Example |
| 54 | 280 | 120 | 0.81 | 0.02 | Invention Example |
| 55 | 290 | 120 | 0.79 | 0.01 | Invention Example |
| 56 | 300 | 120 | 0.82 | 0.03 | Invention Example |
| 57 | 350 | 120 | 0.83 | 0.02 | Invention Example |
| 58 | 400 | 120 | 0.84 | 0.01 | Invention Example |
| 59 | 500 | 120 | 0.82 | 0.02 | Invention Example |
| 60 | 600 | 120 | 0.84 | 0.04 | Invention Example |
| 61 | 200 | 130 | 0.94 | 0.01 | Comparative Example |
| 62 | 225 | 130 | 1.01 | 0.02 | Comparative Example |
| 63 | 250 | 130 | 0.81 | 0.01 | Invention Example |
| 64 | 260 | 130 | 0.79 | 0.01 | Invention Example |
| 65 | 270 | 130 | 0.81 | 0.04 | Invention Example |
| 66 | 280 | 130 | 0.81 | 0.03 | Invention Example |
| 67 | 290 | 130 | 0.80 | 0.04 | Invention Example |
| 68 | 300 | 130 | 0.84 | 0.03 | Invention Example |
| 69 | 350 | 130 | 0.81 | 0.02 | Invention Example |
| 70 | 400 | 130 | 0.83 | 0.02 | Invention Example |

(continued)

| Conditions | Heating rate during decarburization annealing | | Iron loss $W_{17/50}$ in sheet width direction | | Remarks |
|---|---|---|---|---|---|
| | Average heating rate (°C/s) from 500 to 700°C | Reduced heating rate (°C/s) | Mean value (W/kg) | Difference (W/kg) between maximum and minimum values | |
| 71 | 500 | 130 | 0.84 | 0.04 | Invention Example |
| 72 | 600 | 130 | 0.80 | 0.01 | Invention Example |
| 73 | 200 | 140 | 0.90 | 0.04 | Comparative Example |
| 74 | 225 | 140 | 0.89 | 0.03 | Comparative Example |
| 75 | 250 | 140 | 0.83 | 0.01 | Invention Example |
| 76 | 260 | 140 | 0.84 | 0.02 | Invention Example |
| 77 | 270 | 140 | 0.79 | 0.04 | Invention Example |
| 78 | 280 | 140 | 0.80 | 0.02 | Invention Example |
| 79 | 290 | 140 | 0.83 | 0.01 | Invention Example |
| 80 | 300 | 140 | 0.84 | 0.01 | Invention Example |
| 81 | 350 | 140 | 0.84 | 0.01 | Invention Example |
| 82 | 400 | 140 | 0.81 | 0.03 | Invention Example |
| 83 | 500 | 140 | 0.82 | 0.01 | Invention Example |
| 84 | 600 | 140 | 0.82 | 0.04 | Invention Example |
| 85 | 200 | 150 | 0.99 | 0.04 | Comparative Example |
| 86 | 225 | 150 | 0.97 | 0.03 | Comparative Example |
| 87 | 250 | 150 | 0.83 | 0.04 | Invention Example |
| 88 | 260 | 150 | 0.83 | 0.01 | Invention Example |
| 89 | 270 | 150 | 0.80 | 0.04 | Invention Example |
| 90 | 280 | 150 | 0.79 | 0.02 | Invention Example |
| 91 | 290 | 150 | 0.80 | 0.02 | Invention Example |
| 92 | 300 | 150 | 0.83 | 0.02 | Invention Example |
| 93 | 350 | 150 | 0.83 | 0.02 | Invention Example |
| 94 | 400 | 150 | 0.80 | 0.03 | Invention Example |
| 95 | 500 | 150 | 0.84 | 0.04 | Invention Example |
| 96 | 600 | 150 | 0.83 | 0.02 | Invention Example |

[Table 3-3]

| Conditions | Heating rate during decarburization annealing | | Iron loss $W_{17/50}$ in sheet width direction | | Remarks |
|---|---|---|---|---|---|
| | Average heating rate (°C/s) from 500 to 700°C | Reduced heating rate (°C/s) | Mean value (W/kg) | Difference (W/kg) between maximum and minimum values | |
| 97 | 200 | 160 | 0.88 | 0.08 | Comparative Example |
| 98 | 225 | 160 | 0.91 | 0.07 | Comparative Example |
| 99 | 250 | 160 | 0.83 | 0.09 | Comparative Example |
| 100 | 260 | 160 | 0.81 | 0.07 | Comparative Example |

(continued)

| Conditions | Heating rate during decarburization annealing | | Iron loss $W_{17/50}$ in sheet width direction | | Remarks |
| --- | --- | --- | --- | --- | --- |
| | Average heating rate (°C/s) from 500 to 700°C | Reduced heating rate (°C/s) | Mean value (W/kg) | Difference (W/kg) between maximum and minimum values | |
| 101 | 270 | 160 | 0.82 | 0.06 | Comparative Example |
| 102 | 280 | 160 | 0.82 | 0.09 | Comparative Example |
| 103 | 290 | 160 | 0.82 | 0.10 | Comparative Example |
| 104 | 300 | 160 | 0.81 | 0.08 | Comparative Example |
| 105 | 350 | 160 | 0.82 | 0.08 | Comparative Example |
| 106 | 400 | 160 | 0.79 | 0.10 | Comparative Example |
| 107 | 500 | 160 | 0.81 | 0.10 | Comparative Example |
| 108 | 600 | 160 | 0.79 | 0.08 | Comparative Example |
| 109 | 200 | 170 | 0.97 | 0.06 | Comparative Example |
| 110 | 225 | 170 | 0.90 | 0.10 | Comparative Example |
| 111 | 250 | 170 | 0.82 | 0.06 | Comparative Example |
| 112 | 260 | 170 | 0.81 | 0.07 | Comparative Example |
| 113 | 270 | 170 | 0.84 | 0.09 | Comparative Example |
| 114 | 280 | 170 | 0.82 | 0.07 | Comparative Example |
| 115 | 290 | 170 | 0.81 | 0.08 | Comparative Example |
| 116 | 300 | 170 | 0.80 | 0.08 | Comparative Example |
| 117 | 350 | 170 | 0.81 | 0.09 | Comparative Example |
| 118 | 400 | 170 | 0.83 | 0.09 | Comparative Example |
| 119 | 500 | 170 | 0.82 | 0.07 | Comparative Example |
| 120 | 600 | 170 | 0.84 | 0.07 | Comparative Example |
| 121 | 200 | 180 | 0.89 | 0.10 | Comparative Example |
| 122 | 225 | 180 | 0.90 | 0.08 | Comparative Example |
| 123 | 250 | 180 | 0.81 | 0.08 | Comparative Example |
| 124 | 260 | 180 | 0.82 | 0.09 | Comparative Example |
| 125 | 270 | 180 | 0.84 | 0.09 | Comparative Example |
| 126 | 280 | 180 | 0.81 | 0.07 | Comparative Example |
| 127 | 290 | 180 | 0.82 | 0.08 | Comparative Example |
| 128 | 300 | 180 | 0.84 | 0.07 | Comparative Example |
| 129 | 350 | 180 | 0.81 | 0.09 | Comparative Example |
| 130 | 400 | 180 | 0.79 | 0.09 | Comparative Example |
| 131 | 500 | 180 | 0.81 | 0.09 | Comparative Example |
| 132 | 600 | 180 | 0.83 | 0.09 | Comparative Example |
| 133 | 200 | 190 | 0.94 | 0.09 | Comparative Example |
| 134 | 225 | 190 | 0.92 | 0.10 | Comparative Example |
| 135 | 250 | 190 | 0.83 | 0.08 | Comparative Example |
| 136 | 260 | 190 | 0.82 | 0.09 | Comparative Example |

(continued)

| Conditions | Heating rate during decarburization annealing | | Iron loss $W_{17/50}$ in sheet width direction | | Remarks |
| --- | --- | --- | --- | --- | --- |
| | Average heating rate (°C/s) from 500 to 700°C | Reduced heating rate (°C/s) | Mean value (W/kg) | Difference (W/kg) between maximum and minimum values | |
| 137 | 270 | 190 | 0.83 | 0.08 | Comparative Example |
| 138 | 280 | 190 | 0.80 | 0.08 | Comparative Example |
| 139 | 290 | 190 | 0.83 | 0.09 | Comparative Example |
| 140 | 300 | 190 | 0.82 | 0.10 | Comparative Example |
| 141 | 350 | 190 | 0.83 | 0.10 | Comparative Example |
| 142 | 400 | 190 | 0.83 | 0.08 | Comparative Example |
| 143 | 500 | 190 | 0.81 | 0.06 | Comparative Example |
| 144 | 600 | 190 | 0.83 | 0.09 | Comparative Example |

Example 2

A steel slab, which contains inhibitor-forming components and has a composition of components including C: 0.06 mass%, Si: 3.4 mass%, Mn: 0.06 mass%, sol. Al: 0.0250 mass%, N: 0.0090 mass%, S: 0.01 mass%, and Se: 0.01 mass%, with the balance being Fe and unavoidable impurities, was heated to 1400°C and hot-rolled to form a hot-rolled sheet with a thickness of 2.0 mm. Next, the hot-rolled sheet was subjected to the first cold rolling to reach an intermediate thickness of 1.2 mm. Then, the resulting sheet was subjected to intermediate annealing at 1100°C for 80 seconds in an atmosphere consisting of $N_2$: 75 vol% and $H_2$: 25 vol% with a dew point of 46°C, and then the second cold rolling (final cold rolling) using a tandem rolling mill to produce a cold-rolled sheet with a final thickness of 0.20 mm. During the final cold rolling, the flow rate of coolant sprayed onto the steel sheet was adjusted to achieve the steel sheet temperature of 160°C to 250°C.

Subsequently, the cold-rolled sheet was subjected to decarburization annealing serving also as primary recrystallization annealing, at a soaking temperature of 850°C for a soaking time of 100 seconds. During the heating process of decarburization annealing, rapid heating was performed using a transverse induction heating device at an average heating rate of 300 °C/s within the temperature range of 500°C to 700 °C. When the steel sheet temperature reached 650 °C during the induction heating, parameters such as the output of the induction heating device and the line speed were adjusted so that the period of reduced heating, during which the heating rate T reached 100 °C/s in the sheet width direction, satisfied the six conditions shown in Fig. 2. After the decarburization annealing, an annealing separating agent mainly composed of MgO was applied to the surface of the steel sheet, followed by finishing annealing to induce secondary recrystallization. Thereafter, an insulation coating solution containing phosphate, chromate, and colloidal silica in a mass ratio of 3:1:2 was applied to the surface of the steel sheet after the finishing annealing, followed by flattening annealing at 800°C for 30 seconds to bake the coating and thereby obtain a product sheet.

An Epstein test piece having a width of 30 mm and a length of 280 mm was taken from each of the positions x = 0, 0.2w, 0.4w, 0.6w, and 0.8w in the sheet width direction of the product sheet thus obtained, where x represents the distance (mm) from the center in the sheet width direction and w represents half the sheet width (mm). The iron loss $W_{17/50}$ was measured in accordance with JIS Z 2550 to determine both the mean value of the iron loss across the sheet width and the difference between the maximum and minimum values. Table 4 presents the results, demonstrating that the steel sheets formed by reducing the heating rate during rapid heating, under the condition that Expression (1) below is satisfied at all positions across the sheet width, exhibit a difference of 0.04 W/kg or less between the maximum and minimum iron loss values in the sheet width direction:

$$200/T \times 0.2(1-x/w) \leq t \leq 200/T \times 0.8(1-x/w) \ ...(1),$$

provided that x represents the distance (mm) from the center in the sheet width direction, and w represents 1/2 of the sheet width (mm), where $0 \leq x \leq 0.9w$,

Accordingly, even when a grain-oriented electrical steel sheet is produced using a material containing inhibitor-forming components, uniform magnetic properties across the sheet width can be achieved by applying the present invention.

[Table 4]

| Conditions | Difference (W/kg) between maximum and minimum values of iron loss $W_{17/50}$ in sheet width direction | Remarks |
|---|---|---|
| 1 | 0.03 | Invention Example |
| 2 | 0.02 | Invention Example |
| 3 | 0.02 | Invention Example |
| 4 | 0.07 | Comparative Example |
| 5 | 0.08 | Comparative Example |
| 6 | 0.09 | Comparative Example |

Example 3

A steel slab A, which contains no inhibitor-forming components and has a composition of components including C: 0.035 mass%, Si: 3.3 mass%, Mn: 0.05 mass%, sol. Al: 0.0084 mass%, N: 0.0051 mass%, S: 0.0031 mass%, and Se: 0.0031 mass%, with the balance being Fe and unavoidable impurities; and a steel slab B, which contains inhibitor-forming components and has a composition of components including C: 0.06 mass%, Si: 3.4 mass%, Mn: 0.06 mass%, sol. Al: 0.0250 mass%, N: 0.0095 mass%, S: 0.01 mass%, and Se: 0.01 mass%, with the balance being Fe and unavoidable impurities, were each heated to a temperature of 1300°C and then hot-rolled to form a hot-rolled sheet with a thickness of 2.0 mm. The hot-rolled sheet produced from the steel slab A was subjected to hot-rolled sheet annealing at 1000°C for 60 seconds, followed by cold rolling once to produce a cold-rolled sheet with a final thickness of 0.20 mm. Meanwhile, the hot-rolled sheet produced from the steel slab B was subjected to hot-rolled sheet annealing at 1000°C for 60 seconds, followed by the first cold-rolling to achieve an intermediate thickness of 1.2 mm. The resulting sheet was subjected to intermediate annealing at 1100°C for 80 seconds in an atmosphere consisting of $N_2$: 75 vol% and $H_2$: 25 vol%, with a dew point of 46°C, followed by the second cold-rolling step to obtain a cold-rolled sheet with a final thickness of 0.20 mm. Note that the cold rolling (final cold-rolling step) to obtain the final thickness was performed in four passes at steel sheet temperatures described in Table 5.

The cold-rolled sheet was subjected to decarburization annealing serving also as primary recrystallization annealing, at a soaking temperature of 850°C for a soaking time of 100 seconds. During the heating process of the decarburization annealing, the average heating rate in the temperature range of 500°C to 700°C was set to 300°C/s. When the temperature of the steel sheet reached 600°C, the heating rate at each position in the sheet width direction was reduced to 100°C/s for a period t determined with Expression (2) below:

$$t = 200/T \times 0.5 \times (1-x/w) \; ...(2),$$

provided that x represents the distance (mm) from the center in the sheet width direction, and w represents 1/2 of the sheet width (mm), where $0 \leq x \leq 0.9w$. It should be noted that the steel sheets corresponding to condition Nos. 323, 324, 325, and 326 in Table 5 were subjected to rapid heating at the constant heating rate of 300°C/s (without any reduction in the heating rate).

Next, an annealing separating agent mainly composed of MgO was applied to the surface of the steel sheet after the decarburization annealing, followed by finishing annealing to induce secondary recrystallization. An insulation coating solution containing phosphate, chromate, and colloidal silica in a mass ratio of 3:1:2 was applied to the surface of the steel sheet after the finishing annealing, followed by flattening annealing at 800°C × 30 seconds to bake the coating, thereby producing a product sheet.

An Epstein test piece having a width of 30 mm and a length of 280 mm was taken from each of the positions x = 0, 0.2w, 0.4w, 0.6w, and 0.8w in the sheet width direction of the product sheet thus obtained, where x represents the distance (mm) from the center in the sheet width direction and w represents half the sheet width (mm). The iron loss $W_{17/50}$ was measured in accordance with JIS Z 2550 to determine both the mean value of the iron loss across the sheet width and the difference between the maximum and minimum values. Table 5 presents the results, demonstrating that the steel sheets that were subjected to at least one rolling pass at a steel sheet temperature of 150°C to 350°C inclusive, exhibit excellent iron loss $W_{17/50}$ values of 0.84 W/kg or less. In addition, the steel sheets that were subjected to at least one rolling pass at a steel sheet temperature of 30°C to 130°C inclusive, followed by at least one rolling pass at a steel sheet temperature of 150°C to 350°C inclusive, exhibit more excellent iron loss $W_{17/50}$ values of the product sheet of 0.80 W/kg or less. Meanwhile, the steel sheets that were subjected to warm rolling but did not satisfy the heating conditions of the present invention during the decarburization annealing, demonstrate large variations in iron loss value, with the difference between the maximum and minimum values in the sheet width direction being 0.06 W/kg or greater.

[Table 5-1]

| Condition No. | Slab symbol | Final cold rolling | | | | Iron loss $W_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 1 | A | 100 | 100 | 100 | 100 | 0.92 | 0.02 | Comparative Example |
| 2 | A | 110 | 100 | 100 | 100 | 0.95 | 0.02 | Comparative Example |
| 3 | A | 120 | 100 | 100 | 100 | 0.98 | 0.02 | Comparative Example |
| 4 | A | 130 | 100 | 100 | 100 | 0.95 | 0.01 | Comparative Example |
| 5 | A | 140 | 100 | 100 | 100 | 0.89 | 0.03 | Comparative Example |
| 6 | A | 150 | 100 | 100 | 100 | 0.83 | 0.01 | Invention Example |
| 7 | A | 160 | 100 | 100 | 100 | 0.82 | 0.04 | Invention Example |
| 8 | A | 170 | 100 | 100 | 100 | 0.84 | 0.02 | Invention Example |
| 9 | A | 180 | 100 | 100 | 100 | 0.84 | 0.02 | Invention Example |
| 10 | A | 190 | 100 | 100 | 100 | 0.82 | 0.03 | Invention Example |
| 11 | A | 200 | 100 | 100 | 100 | 0.82 | 0.02 | Invention Example |
| 12 | A | 250 | 100 | 100 | 100 | 0.83 | 0.02 | Invention Example |
| 13 | A | 260 | 100 | 100 | 100 | 0.83 | 0.03 | Invention Example |
| 14 | A | 270 | 100 | 100 | 100 | 0.83 | 0.03 | Invention Example |
| 15 | A | 280 | 100 | 100 | 100 | 0.83 | 0.04 | Invention Example |
| 16 | A | 290 | 100 | 100 | 100 | 0.82 | 0.02 | Invention Example |
| 17 | A | 300 | 100 | 100 | 100 | 0.84 | 0.02 | Invention Example |
| 18 | A | 310 | 100 | 100 | 100 | 0.84 | 0.02 | Invention Example |
| 19 | A | 320 | 100 | 100 | 100 | 0.83 | 0.03 | Invention Example |
| 20 | A | 330 | 100 | 100 | 100 | 0.84 | 0.03 | Invention Example |

(continued)

| Condition No. | Slab symbol | Final cold rolling | | | | Iron loss $W_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 21 | A | 340 | 100 | 100 | 100 | 0.83 | 0.02 | Invention Example |
| 22 | A | 350 | 100 | 100 | 100 | 0.82 | 0.03 | Invention Example |
| 23 | A | 360 | 100 | 100 | 100 | 0.88 | 0.01 | Comparative Example |
| 24 | A | 370 | 100 | 100 | 100 | 0.94 | 0.03 | Comparative Example |
| 25 | A | 380 | 100 | 100 | 100 | 0.95 | 0.03 | Comparative Example |
| 26 | A | 390 | 100 | 100 | 100 | 1.00 | 0.04 | Comparative Example |
| 27 | A | 400 | 100 | 100 | 100 | 1.00 | 0.02 | Comparative Example |
| 28 | A | 100 | 110 | 100 | 100 | 0.90 | 0.01 | Comparative Example |
| 29 | A | 100 | 120 | 100 | 100 | 0.99 | 0.01 | Comparative Example |
| 30 | A | 100 | 130 | 100 | 100 | 0.93 | 0.01 | Comparative Example |
| 31 | A | 100 | 140 | 100 | 100 | 0.96 | 0.04 | Comparative Example |
| 32 | A | 100 | 150 | 100 | 100 | 0.78 | 0.03 | Invention Example |
| 33 | A | 100 | 160 | 100 | 100 | 0.79 | 0.01 | Invention Example |
| 34 | A | 100 | 170 | 100 | 100 | 0.79 | 0.03 | Invention Example |
| 35 | A | 100 | 180 | 100 | 100 | 0.80 | 0.03 | Invention Example |
| 36 | A | 100 | 190 | 100 | 100 | 0.80 | 0.03 | Invention Example |
| 37 | A | 100 | 200 | 100 | 100 | 0.79 | 0.02 | Invention Example |
| 38 | A | 100 | 250 | 100 | 100 | 0.79 | 0.04 | Invention Example |
| 39 | A | 100 | 260 | 100 | 100 | 0.79 | 0.03 | Invention Example |
| 40 | A | 100 | 270 | 100 | 100 | 0.80 | 0.04 | Invention Example |
| 41 | A | 100 | 280 | 100 | 100 | 0.79 | 0.03 | Invention Example |

(continued)

| Condition No. | Slab symbol | Final cold rolling | | | | Iron loss $W_{17/50}$ in sheet width direction | | Remarks |
| --- | --- | --- | --- | --- | --- | --- | --- | --- |
| | | 1st pass | 2nd pass | 3rd pass | 4th pass | Mean value (W/kg) | Difference (W/kg) between maximum and minimum values | |
| 42 | A | 100 | 290 | 100 | 100 | 0.79 | 0.02 | Invention Example |
| 43 | A | 100 | 300 | 100 | 100 | 0.80 | 0.01 | Invention Example |
| 44 | A | 100 | 310 | 100 | 100 | 0.79 | 0.03 | Invention Example |
| 45 | A | 100 | 320 | 100 | 100 | 0.79 | 0.02 | Invention Example |
| 46 | A | 100 | 330 | 100 | 100 | 0.79 | 0.03 | Invention Example |
| 47 | A | 100 | 340 | 100 | 100 | 0.79 | 0.03 | Invention Example |
| 48 | A | 100 | 350 | 100 | 100 | 0.79 | 0.01 | Invention Example |
| 49 | A | 100 | 360 | 100 | 100 | 0.95 | 0.02 | Comparative Example |
| 50 | A | 100 | 370 | 100 | 100 | 0.98 | 0.03 | Comparative Example |
| 51 | A | 100 | 380 | 100 | 100 | 0.91 | 0.01 | Comparative Example |
| 52 | A | 100 | 390 | 100 | 100 | 0.97 | 0.04 | Comparative Example |
| 53 | A | 100 | 400 | 100 | 100 | 0.97 | 0.03 | Comparative Example |

[Table 5-2]

| Condition No. | Slab symbol | Final cold rolling | | | | Iron loss $W_{17/50}$ in sheet width direction | | Remarks |
| --- | --- | --- | --- | --- | --- | --- | --- | --- |
| | | 1st pass | 2nd pass | 3rd pass | 4th pass | Mean value (W/kg) | Difference (W/kg) between maximum and minimum values | |
| 54 | A | 100 | 100 | 110 | 100 | 0.91 | 0.02 | Comparative Example |
| 55 | A | 100 | 100 | 120 | 100 | 1.00 | 0.02 | Comparative Example |
| 56 | A | 100 | 100 | 130 | 100 | 1.00 | 0.04 | Comparative Example |
| 57 | A | 100 | 100 | 140 | 100 | 0.92 | 0.02 | Comparative Example |
| 58 | A | 100 | 100 | 150 | 100 | 0.79 | 0.03 | Invention Example |

(continued)

| Condition No. | Slab symbol | Final cold rolling | | | | Iron loss $W_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 59 | A | 100 | 100 | 160 | 100 | 0.79 | 0.02 | Invention Example |
| 60 | A | 100 | 100 | 170 | 100 | 0.79 | 0.01 | Invention Example |
| 61 | A | 100 | 100 | 180 | 100 | 0.79 | 0.03 | Invention Example |
| 62 | A | 100 | 100 | 190 | 100 | 0.78 | 0.04 | Invention Example |
| 63 | A | 100 | 100 | 200 | 100 | 0.80 | 0.03 | Invention Example |
| 64 | A | 100 | 100 | 250 | 100 | 0.78 | 0.04 | Invention Example |
| 65 | A | 100 | 100 | 260 | 100 | 0.79 | 0.02 | Invention Example |
| 66 | A | 100 | 100 | 270 | 100 | 0.80 | 0.01 | Invention Example |
| 67 | A | 100 | 100 | 280 | 100 | 0.79 | 0.03 | Invention Example |
| 68 | A | 100 | 100 | 290 | 100 | 0.79 | 0.03 | Invention Example |
| 69 | A | 100 | 100 | 300 | 100 | 0.79 | 0.02 | Invention Example |
| 70 | A | 100 | 100 | 310 | 100 | 0.79 | 0.01 | Invention Example |
| 71 | A | 100 | 100 | 320 | 100 | 0.79 | 0.03 | Invention Example |
| 72 | A | 100 | 100 | 330 | 100 | 0.78 | 0.03 | Invention Example |
| 73 | A | 100 | 100 | 340 | 100 | 0.79 | 0.04 | Invention Example |
| 74 | A | 100 | 100 | 350 | 100 | 0.78 | 0.04 | Invention Example |
| 75 | A | 100 | 100 | 360 | 100 | 0.95 | 0.02 | Comparative Example |
| 76 | A | 100 | 100 | 370 | 100 | 1.01 | 0.02 | Comparative Example |
| 77 | A | 100 | 100 | 380 | 100 | 0.98 | 0.01 | Comparative Example |
| 78 | A | 100 | 100 | 390 | 100 | 0.95 | 0.03 | Comparative Example |
| 79 | A | 100 | 100 | 400 | 100 | 1.00 | 0.02 | Comparative Example |

(continued)

| Condition No. | Slab symbol | Final cold rolling | | | | Iron loss $W_{17/50}$ in sheet width direction | | Remarks |
| --- | --- | --- | --- | --- | --- | --- | --- | --- |
| | | 1st pass | 2nd pass | 3rd pass | 4th pass | Mean value (W/kg) | Difference (W/kg) between maximum and minimum values | |
| 80 | A | 100 | 100 | 100 | 110 | 0.93 | 0.04 | Comparative Example |
| 81 | A | 100 | 100 | 100 | 120 | 0.94 | 0.01 | Comparative Example |
| 82 | A | 100 | 100 | 100 | 130 | 0.96 | 0.02 | Comparative Example |
| 83 | A | 100 | 100 | 100 | 140 | 0.89 | 0.04 | Comparative Example |
| 84 | A | 100 | 100 | 100 | 150 | 0.80 | 0.03 | Invention Example |
| 85 | A | 100 | 100 | 100 | 160 | 0.80 | 0.03 | Invention Example |
| 86 | A | 100 | 100 | 100 | 170 | 0.78 | 0.04 | Invention Example |
| 87 | A | 100 | 100 | 100 | 180 | 0.78 | 0.04 | Invention Example |
| 88 | A | 100 | 100 | 100 | 190 | 0.79 | 0.03 | Invention Example |
| 89 | A | 100 | 100 | 100 | 200 | 0.80 | 0.02 | Invention Example |
| 90 | A | 100 | 100 | 100 | 250 | 0.79 | 0.04 | Invention Example |
| 91 | A | 100 | 100 | 100 | 260 | 0.80 | 0.02 | Invention Example |
| 92 | A | 100 | 100 | 100 | 270 | 0.79 | 0.03 | Invention Example |
| 93 | A | 100 | 100 | 100 | 280 | 0.80 | 0.04 | Invention Example |
| 94 | A | 100 | 100 | 100 | 290 | 0.79 | 0.02 | Invention Example |
| 95 | A | 100 | 100 | 100 | 300 | 0.79 | 0.01 | Invention Example |
| 96 | A | 100 | 100 | 100 | 310 | 0.79 | 0.01 | Invention Example |
| 97 | A | 100 | 100 | 100 | 320 | 0.79 | 0.04 | Invention Example |
| 98 | A | 100 | 100 | 100 | 330 | 0.79 | 0.02 | Invention Example |
| 99 | A | 100 | 100 | 100 | 340 | 0.80 | 0.02 | Invention Example |
| 100 | A | 100 | 100 | 100 | 350 | 0.79 | 0.03 | Invention Example |

(continued)

| Condition No. | Slab symbol | Final cold rolling | | | | Iron loss W$_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 101 | A | 100 | 100 | 100 | 360 | 1.00 | 0.01 | Comparative Example |
| 102 | A | 100 | 100 | 100 | 370 | 0.95 | 0.04 | Comparative Example |
| 103 | A | 100 | 100 | 100 | 380 | 0.89 | 0.02 | Comparative Example |
| 104 | A | 100 | 100 | 100 | 390 | 0.92 | 0.04 | Comparative Example |
| 105 | A | 100 | 100 | 100 | 400 | 0.93 | 0.02 | Comparative Example |

[Table 5-3]

| Condition No. | Slab symbol | Final cold rolling | | | | Iron loss W$_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 106 | A | 150 | 150 | 50 | 50 | 0.84 | 0.04 | Invention Example |
| 107 | A | 200 | 200 | 50 | 50 | 0.82 | 0.03 | Invention Example |
| 108 | A | 300 | 300 | 50 | 50 | 0.83 | 0.03 | Invention Example |
| 109 | A | 350 | 350 | 50 | 50 | 0.83 | 0.02 | Invention Example |
| 110 | A | 150 | 50 | 350 | 50 | 0.80 | 0.02 | Invention Example |
| 111 | A | 200 | 50 | 300 | 50 | 0.79 | 0.04 | Invention Example |
| 112 | A | 300 | 50 | 200 | 50 | 0.80 | 0.02 | Invention Example |
| 113 | A | 350 | 50 | 150 | 50 | 0.78 | 0.03 | Invention Example |
| 114 | A | 150 | 50 | 50 | 150 | 0.78 | 0.03 | Invention Example |
| 115 | A | 200 | 50 | 50 | 200 | 0.80 | 0.02 | Invention Example |
| 116 | A | 300 | 50 | 50 | 300 | 0.79 | 0.02 | Invention Example |
| 117 | A | 350 | 50 | 50 | 350 | 0.78 | 0.03 | Invention Example |
| 118 | A | 50 | 150 | 150 | 50 | 0.80 | 0.02 | Invention Example |
| 119 | A | 50 | 200 | 200 | 50 | 0.78 | 0.02 | Invention Example |
| 120 | A | 50 | 300 | 300 | 50 | 0.78 | 0.03 | Invention Example |
| 121 | A | 50 | 350 | 350 | 50 | 0.79 | 0.01 | Invention Example |
| 122 | A | 50 | 150 | 50 | 150 | 0.79 | 0.03 | Invention Example |
| 123 | A | 50 | 200 | 50 | 200 | 0.79 | 0.01 | Invention Example |
| 124 | A | 50 | 300 | 50 | 300 | 0.80 | 0.03 | Invention Example |
| 125 | A | 50 | 350 | 50 | 350 | 0.80 | 0.02 | Invention Example |
| 126 | A | 50 | 50 | 150 | 150 | 0.78 | 0.02 | Invention Example |
| 127 | A | 50 | 50 | 200 | 200 | 0.80 | 0.01 | Invention Example |

(continued)

| Condition No. | Slab symbol | Final cold rolling | | | | Iron loss $W_{17/50}$ in sheet width direction | | Remarks |
| --- | --- | --- | --- | --- | --- | --- | --- | --- |
| | | 1st pass | 2nd pass | 3rd pass | 4th pass | Mean value (W/kg) | Difference (W/kg) between maximum and minimum values | |
| 128 | A | 50 | 50 | 300 | 300 | 0.80 | 0.02 | Invention Example |
| 129 | A | 50 | 50 | 350 | 350 | 0.79 | 0.01 | Invention Example |
| 130 | A | 150 | 350 | 150 | 50 | 0.83 | 0.03 | Invention Example |
| 131 | A | 200 | 300 | 200 | 50 | 0.84 | 0.03 | Invention Example |
| 132 | A | 300 | 200 | 300 | 50 | 0.84 | 0.03 | Invention Example |
| 133 | A | 350 | 150 | 350 | 50 | 0.83 | 0.02 | Invention Example |
| 134 | A | 150 | 350 | 50 | 150 | 0.79 | 0.03 | Invention Example |
| 135 | A | 200 | 300 | 50 | 200 | 0.79 | 0.01 | Invention Example |
| 136 | A | 300 | 200 | 50 | 300 | 0.79 | 0.04 | Invention Example |
| 137 | A | 350 | 150 | 50 | 350 | 0.79 | 0.02 | Invention Example |
| 138 | A | 150 | 50 | 150 | 150 | 0.79 | 0.02 | Invention Example |
| 139 | A | 200 | 50 | 200 | 200 | 0.78 | 0.03 | Invention Example |
| 140 | A | 300 | 50 | 300 | 300 | 0.79 | 0.04 | Invention Example |
| 141 | A | 350 | 50 | 350 | 350 | 0.79 | 0.02 | Invention Example |
| 142 | A | 50 | 150 | 150 | 150 | 0.79 | 0.03 | Invention Example |
| 143 | A | 50 | 200 | 200 | 200 | 0.78 | 0.03 | Invention Example |
| 144 | A | 50 | 300 | 300 | 300 | 0.80 | 0.03 | Invention Example |
| 145 | A | 50 | 350 | 350 | 350 | 0.79 | 0.01 | Invention Example |
| 146 | A | 150 | 150 | 150 | 150 | 0.84 | 0.01 | Invention Example |
| 147 | A | 200 | 200 | 200 | 200 | 0.82 | 0.04 | Invention Example |
| 148 | A | 300 | 300 | 300 | 300 | 0.82 | 0.04 | Invention Example |
| 149 | A | 350 | 350 | 350 | 350 | 0.82 | 0.01 | Invention Example |

[Table 5-4]

| Condition No. | Slab symbol | Final cold rolling | | | | Iron loss $W_{17/50}$ in sheet width direction | | Remarks |
| --- | --- | --- | --- | --- | --- | --- | --- | --- |
| | | 1st pass | 2nd pass | 3rd pass | 4th pass | Mean value (W/kg) | Difference (W/kg) between maximum and minimum values | |
| 150 | A | 0 | 200 | 200 | 200 | 0.82 | 0.04 | Invention Example |
| 151 | A | 10 | 200 | 200 | 200 | 0.83 | 0.04 | Invention Example |
| 152 | A | 20 | 200 | 200 | 200 | 0.84 | 0.02 | Invention Example |
| 153 | A | 30 | 200 | 200 | 200 | 0.79 | 0.03 | Invention Example |
| 154 | A | 40 | 200 | 200 | 200 | 0.80 | 0.04 | Invention Example |

(continued)

| Condition No. | Slab symbol | Final cold rolling | | | | Iron loss $W_{17/50}$ in sheet width direction | | Remarks |
| --- | --- | --- | --- | --- | --- | --- | --- | --- |
| | | 1st pass | 2nd pass | 3rd pass | 4th pass | Mean value (W/kg) | Difference (W/kg) between maximum and minimum values | |
| 155 | A | 50 | 200 | 200 | 200 | 0.78 | 0.04 | Invention Example |
| 156 | A | 100 | 200 | 200 | 200 | 0.79 | 0.01 | Invention Example |
| 157 | A | 110 | 200 | 200 | 200 | 0.79 | 0.03 | Invention Example |
| 158 | A | 120 | 200 | 200 | 200 | 0.80 | 0.02 | Invention Example |
| 159 | A | 130 | 200 | 200 | 200 | 0.79 | 0.02 | Invention Example |
| 160 | A | 140 | 200 | 200 | 200 | 0.84 | 0.02 | Invention Example |
| 161 | A | 150 | 200 | 200 | 200 | 0.83 | 0.02 | Invention Example |
| 162 | A | 100 | 100 | 100 | 100 | 0.97 | 0.06 | Comparative Example |
| 163 | A | 200 | 200 | 200 | 200 | 0.84 | 0.11 | Comparative Example |

[Table 5-5]

| Condition No. | Slab symbol | Final cold rolling | | | | Iron loss $W_{17/50}$ in sheet width direction | | Remarks |
| --- | --- | --- | --- | --- | --- | --- | --- | --- |
| | | 1st pass | 2nd pass | 3rd pass | 4th pass | Mean value (W/kg) | Difference (W/kg) between maximum and minimum values | |
| 164 | B | 100 | 100 | 100 | 100 | 0.90 | 0.03 | Comparative Example |
| 165 | B | 110 | 100 | 100 | 100 | 0.91 | 0.01 | Comparative Example |
| 166 | B | 120 | 100 | 100 | 100 | 0.91 | 0.01 | Comparative Example |
| 167 | B | 130 | 100 | 100 | 100 | 0.94 | 0.01 | Comparative Example |
| 168 | B | 140 | 100 | 100 | 100 | 1.00 | 0.04 | Comparative Example |
| 169 | B | 150 | 100 | 100 | 100 | 0.82 | 0.03 | Invention Example |
| 170 | B | 160 | 100 | 100 | 100 | 0.82 | 0.01 | Invention Example |
| 171 | B | 170 | 100 | 100 | 100 | 0.83 | 0.04 | Invention Example |

(continued)

| Condition No. | Slab symbol | Final cold rolling | | | | Iron loss W$_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 172 | B | 180 | 100 | 100 | 100 | 0.84 | 0.02 | Invention Example |
| 173 | B | 190 | 100 | 100 | 100 | 0.84 | 0.01 | Invention Example |
| 174 | B | 200 | 100 | 100 | 100 | 0.83 | 0.04 | Invention Example |
| 175 | B | 250 | 100 | 100 | 100 | 0.83 | 0.04 | Invention Example |
| 176 | B | 260 | 100 | 100 | 100 | 0.83 | 0.03 | Invention Example |
| 177 | B | 270 | 100 | 100 | 100 | 0.83 | 0.03 | Invention Example |
| 178 | B | 280 | 100 | 100 | 100 | 0.84 | 0.02 | Invention Example |
| 179 | B | 290 | 100 | 100 | 100 | 0.82 | 0.02 | Invention Example |
| 180 | B | 300 | 100 | 100 | 100 | 0.82 | 0.03 | Invention Example |
| 181 | B | 310 | 100 | 100 | 100 | 0.84 | 0.02 | Invention Example |
| 182 | B | 320 | 100 | 100 | 100 | 0.83 | 0.03 | Invention Example |
| 183 | B | 330 | 100 | 100 | 100 | 0.84 | 0.04 | Invention Example |
| 184 | B | 340 | 100 | 100 | 100 | 0.83 | 0.02 | Invention Example |
| 185 | B | 350 | 100 | 100 | 100 | 0.83 | 0.01 | Invention Example |
| 186 | B | 360 | 100 | 100 | 100 | 0.88 | 0.02 | Comparative Example |
| 187 | B | 370 | 100 | 100 | 100 | 0.96 | 0.03 | Comparative Example |
| 188 | B | 380 | 100 | 100 | 100 | 0.95 | 0.03 | Comparative Example |
| 189 | B | 390 | 100 | 100 | 100 | 0.96 | 0.03 | Comparative Example |
| 190 | B | 400 | 100 | 100 | 100 | 0.89 | 0.01 | Comparative Example |
| 191 | B | 100 | 110 | 100 | 100 | 0.96 | 0.03 | Comparative Example |
| 192 | B | 100 | 120 | 100 | 100 | 0.92 | 0.03 | Comparative Example |

(continued)

| Condition No. | Slab symbol | Final cold rolling | | | | Iron loss W$_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 193 | B | 100 | 130 | 100 | 100 | 0.93 | 0.02 | Comparative Example |
| 194 | B | 100 | 140 | 100 | 100 | 1.00 | 0.03 | Comparative Example |
| 195 | B | 100 | 150 | 100 | 100 | 0.79 | 0.01 | Invention Example |
| 196 | B | 100 | 160 | 100 | 100 | 0.79 | 0.03 | Invention Example |
| 197 | B | 100 | 170 | 100 | 100 | 0.78 | 0.03 | Invention Example |
| 198 | B | 100 | 180 | 100 | 100 | 0.79 | 0.02 | Invention Example |
| 199 | B | 100 | 190 | 100 | 100 | 0.78 | 0.04 | Invention Example |
| 200 | B | 100 | 200 | 100 | 100 | 0.80 | 0.02 | Invention Example |
| 201 | B | 100 | 250 | 100 | 100 | 0.78 | 0.03 | Invention Example |
| 202 | B | 100 | 260 | 100 | 100 | 0.79 | 0.03 | Invention Example |
| 203 | B | 100 | 270 | 100 | 100 | 0.80 | 0.03 | Invention Example |
| 204 | B | 100 | 280 | 100 | 100 | 0.79 | 0.04 | Invention Example |
| 205 | B | 100 | 290 | 100 | 100 | 0.79 | 0.03 | Invention Example |
| 206 | B | 100 | 300 | 100 | 100 | 0.79 | 0.03 | Invention Example |
| 207 | B | 100 | 310 | 100 | 100 | 0.78 | 0.02 | Invention Example |
| 208 | B | 100 | 320 | 100 | 100 | 0.78 | 0.02 | Invention Example |
| 209 | B | 100 | 330 | 100 | 100 | 0.79 | 0.02 | Invention Example |
| 210 | B | 100 | 340 | 100 | 100 | 0.79 | 0.02 | Invention Example |
| 211 | B | 100 | 350 | 100 | 100 | 0.79 | 0.03 | Invention Example |
| 212 | B | 100 | 360 | 100 | 100 | 1.01 | 0.02 | Comparative Example |
| 213 | B | 100 | 370 | 100 | 100 | 0.88 | 0.01 | Comparative Example |

(continued)

| Condition No. | Slab symbol | Final cold rolling | | | | Iron loss W$_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 214 | B | 100 | 380 | 100 | 100 | 0.89 | 0.03 | Comparative Example |
| 215 | B | 100 | 390 | 100 | 100 | 0.91 | 0.03 | Comparative Example |
| 216 | B | 100 | 400 | 100 | 100 | 0.93 | 0.02 | Comparative Example |

[Table 5-6]

| Condition No. | Slab symbol | Final cold rolling | | | | Iron loss W$_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 217 | B | 100 | 100 | 110 | 100 | 0.96 | 0.03 | Comparative Example |
| 218 | B | 100 | 100 | 120 | 100 | 0.91 | 0.04 | Comparative Example |
| 219 | B | 100 | 100 | 130 | 100 | 0.96 | 0.04 | Comparative Example |
| 220 | B | 100 | 100 | 140 | 100 | 0.95 | 0.04 | Comparative Example |
| 221 | B | 100 | 100 | 150 | 100 | 0.79 | 0.02 | Invention Example |
| 222 | B | 100 | 100 | 160 | 100 | 0.78 | 0.02 | Invention Example |
| 223 | B | 100 | 100 | 170 | 100 | 0.80 | 0.01 | Invention Example |
| 224 | B | 100 | 100 | 180 | 100 | 0.79 | 0.02 | Invention Example |
| 225 | B | 100 | 100 | 190 | 100 | 0.79 | 0.02 | Invention Example |
| 226 | B | 100 | 100 | 200 | 100 | 0.79 | 0.03 | Invention Example |
| 227 | B | 100 | 100 | 250 | 100 | 0.80 | 0.03 | Invention Example |
| 228 | B | 100 | 100 | 260 | 100 | 0.78 | 0.01 | Invention Example |
| 229 | B | 100 | 100 | 270 | 100 | 0.78 | 0.04 | Invention Example |
| 230 | B | 100 | 100 | 280 | 100 | 0.80 | 0.01 | Invention Example |

(continued)

| Condition No. | Slab symbol | Final cold rolling | | | | Iron loss W$_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 231 | B | 100 | 100 | 290 | 100 | 0.79 | 0.03 | Invention Example |
| 232 | B | 100 | 100 | 300 | 100 | 0.79 | 0.02 | Invention Example |
| 233 | B | 100 | 100 | 310 | 100 | 0.80 | 0.02 | Invention Example |
| 234 | B | 100 | 100 | 320 | 100 | 0.80 | 0.04 | Invention Example |
| 235 | B | 100 | 100 | 330 | 100 | 0.78 | 0.04 | Invention Example |
| 236 | B | 100 | 100 | 340 | 100 | 0.79 | 0.02 | Invention Example |
| 237 | B | 100 | 100 | 350 | 100 | 0.78 | 0.02 | Invention Example |
| 238 | B | 100 | 100 | 360 | 100 | 0.92 | 0.01 | Comparative Example |
| 239 | B | 100 | 100 | 370 | 100 | 1.01 | 0.02 | Comparative Example |
| 240 | B | 100 | 100 | 380 | 100 | 1.01 | 0.04 | Comparative Example |
| 241 | B | 100 | 100 | 390 | 100 | 0.91 | 0.04 | Comparative Example |
| 242 | B | 100 | 100 | 400 | 100 | 0.93 | 0.02 | Comparative Example |
| 243 | B | 100 | 100 | 100 | 110 | 0.96 | 0.02 | Comparative Example |
| 244 | B | 100 | 100 | 100 | 120 | 0.96 | 0.04 | Comparative Example |
| 245 | B | 100 | 100 | 100 | 130 | 0.93 | 0.02 | Comparative Example |
| 246 | B | 100 | 100 | 100 | 140 | 1.01 | 0.03 | Comparative Example |
| 247 | B | 100 | 100 | 100 | 150 | 0.79 | 0.02 | Invention Example |
| 248 | B | 100 | 100 | 100 | 160 | 0.79 | 0.02 | Invention Example |
| 249 | B | 100 | 100 | 100 | 170 | 0.79 | 0.02 | Invention Example |
| 250 | B | 100 | 100 | 100 | 180 | 0.79 | 0.03 | Invention Example |
| 251 | B | 100 | 100 | 100 | 190 | 0.79 | 0.02 | Invention Example |

(continued)

| Condition No. | Slab symbol | Final cold rolling | | | | Iron loss $W_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 252 | B | 100 | 100 | 100 | 200 | 0.79 | 0.04 | Invention Example |
| 253 | B | 100 | 100 | 100 | 250 | 0.79 | 0.03 | Invention Example |
| 254 | B | 100 | 100 | 100 | 260 | 0.79 | 0.02 | Invention Example |
| 255 | B | 100 | 100 | 100 | 270 | 0.80 | 0.02 | Invention Example |
| 256 | B | 100 | 100 | 100 | 280 | 0.79 | 0.02 | Invention Example |
| 257 | B | 100 | 100 | 100 | 290 | 0.80 | 0.04 | Invention Example |
| 258 | B | 100 | 100 | 100 | 300 | 0.80 | 0.04 | Invention Example |
| 259 | B | 100 | 100 | 100 | 310 | 0.80 | 0.04 | Invention Example |
| 260 | B | 100 | 100 | 100 | 320 | 0.78 | 0.02 | Invention Example |
| 261 | B | 100 | 100 | 100 | 330 | 0.79 | 0.03 | Invention Example |
| 262 | B | 100 | 100 | 100 | 340 | 0.79 | 0.01 | Invention Example |
| 263 | B | 100 | 100 | 100 | 350 | 0.79 | 0.02 | Invention Example |
| 264 | B | 100 | 100 | 100 | 360 | 0.92 | 0.02 | Comparative Example |
| 265 | B | 100 | 100 | 100 | 370 | 0.97 | 0.04 | Comparative Example |
| 266 | B | 100 | 100 | 100 | 380 | 0.98 | 0.01 | Comparative Example |
| 267 | B | 100 | 100 | 100 | 390 | 0.99 | 0.01 | Comparative Example |
| 268 | B | 100 | 100 | 100 | 400 | 0.95 | 0.03 | Comparative Example |

[Table 5-7]

| Condition No. | Slab symbol | Final cold rolling | | | | Iron loss $W_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 269 | B | 150 | 150 | 50 | 50 | 0.82 | 0.02 | Invention Example |

(continued)

| Condition No. | Slab symbol | Final cold rolling | | | | Iron loss $W_{17/50}$ in sheet width direction | | Remarks |
| --- | --- | --- | --- | --- | --- | --- | --- | --- |
| | | 1st pass | 2nd pass | 3rd pass | 4th pass | Mean value (W/kg) | Difference (W/kg) between maximum and minimum values | |
| 270 | B | 200 | 200 | 50 | 50 | 0.82 | 0.04 | Invention Example |
| 271 | B | 300 | 300 | 50 | 50 | 0.83 | 0.03 | Invention Example |
| 272 | B | 350 | 350 | 50 | 50 | 0.83 | 0.02 | Invention Example |
| 273 | B | 150 | 50 | 350 | 50 | 0.79 | 0.01 | Invention Example |
| 274 | B | 200 | 50 | 300 | 50 | 0.78 | 0.02 | Invention Example |
| 275 | B | 300 | 50 | 200 | 50 | 0.79 | 0.03 | Invention Example |
| 276 | B | 350 | 50 | 150 | 50 | 0.78 | 0.02 | Invention Example |
| 277 | B | 150 | 50 | 50 | 150 | 0.78 | 0.04 | Invention Example |
| 278 | B | 200 | 50 | 50 | 200 | 0.80 | 0.03 | Invention Example |
| 279 | B | 300 | 50 | 50 | 300 | 0.78 | 0.04 | Invention Example |
| 280 | B | 350 | 50 | 50 | 350 | 0.79 | 0.02 | Invention Example |
| 281 | B | 50 | 150 | 150 | 50 | 0.78 | 0.03 | Invention Example |
| 282 | B | 50 | 200 | 200 | 50 | 0.78 | 0.02 | Invention Example |
| 283 | B | 50 | 300 | 300 | 50 | 0.78 | 0.01 | Invention Example |
| 284 | B | 50 | 350 | 350 | 50 | 0.78 | 0.04 | Invention Example |
| 285 | B | 50 | 150 | 50 | 150 | 0.78 | 0.01 | Invention Example |
| 286 | B | 50 | 200 | 50 | 200 | 0.80 | 0.03 | Invention Example |
| 287 | B | 50 | 300 | 50 | 300 | 0.80 | 0.04 | Invention Example |
| 288 | B | 50 | 350 | 50 | 350 | 0.79 | 0.01 | Invention Example |
| 289 | B | 50 | 50 | 150 | 150 | 0.79 | 0.03 | Invention Example |
| 290 | B | 50 | 50 | 200 | 200 | 0.78 | 0.01 | Invention Example |
| 291 | B | 50 | 50 | 300 | 300 | 0.78 | 0.02 | Invention Example |
| 292 | B | 50 | 50 | 350 | 350 | 0.79 | 0.02 | Invention Example |
| 293 | B | 150 | 350 | 150 | 50 | 0.82 | 0.03 | Invention Example |
| 294 | B | 200 | 300 | 200 | 50 | 0.83 | 0.01 | Invention Example |
| 295 | B | 300 | 200 | 300 | 50 | 0.84 | 0.04 | Invention Example |
| 296 | B | 350 | 150 | 350 | 50 | 0.82 | 0.04 | Invention Example |
| 297 | B | 150 | 350 | 50 | 150 | 0.79 | 0.01 | Invention Example |
| 298 | B | 200 | 300 | 50 | 200 | 0.79 | 0.03 | Invention Example |
| 299 | B | 300 | 200 | 50 | 300 | 0.79 | 0.01 | Invention Example |
| 300 | B | 350 | 150 | 50 | 350 | 0.79 | 0.01 | Invention Example |
| 301 | B | 150 | 50 | 150 | 150 | 0.79 | 0.01 | Invention Example |
| 302 | B | 200 | 50 | 200 | 200 | 0.79 | 0.03 | Invention Example |
| 303 | B | 300 | 50 | 300 | 300 | 0.79 | 0.02 | Invention Example |
| 304 | B | 350 | 50 | 350 | 350 | 0.79 | 0.04 | Invention Example |
| 305 | B | 50 | 150 | 150 | 150 | 0.80 | 0.03 | Invention Example |

(continued)

| Condition No. | Slab symbol | Final cold rolling | | | | Iron loss $W_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 306 | B | 50 | 200 | 200 | 200 | 0.80 | 0.01 | Invention Example |
| 307 | B | 50 | 300 | 300 | 300 | 0.79 | 0.02 | Invention Example |
| 308 | B | 50 | 350 | 350 | 350 | 0.80 | 0.02 | Invention Example |
| 309 | B | 150 | 150 | 150 | 150 | 0.84 | 0.02 | Invention Example |
| 310 | B | 200 | 200 | 200 | 200 | 0.83 | 0.02 | Invention Example |
| 311 | B | 300 | 300 | 300 | 300 | 0.82 | 0.04 | Invention Example |
| 312 | B | 350 | 350 | 350 | 350 | 0.83 | 0.03 | Invention Example |

[Table 5-8]

| Condition No. | Slab symbol | Final cold rolling | | | | Iron loss $W_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 313 | B | 0 | 200 | 200 | 200 | 0.84 | 0.03 | Invention Example |
| 314 | B | 10 | 200 | 200 | 200 | 0.83 | 0.02 | Invention Example |
| 315 | B | 20 | 200 | 200 | 200 | 0.82 | 0.03 | Invention Example |
| 316 | B | 30 | 200 | 200 | 200 | 0.79 | 0.02 | Invention Example |
| 317 | B | 40 | 200 | 200 | 200 | 0.78 | 0.03 | Invention Example |
| 318 | B | 50 | 200 | 200 | 200 | 0.79 | 0.02 | Invention Example |
| 319 | B | 100 | 200 | 200 | 200 | 0.79 | 0.02 | Invention Example |
| 320 | B | 110 | 200 | 200 | 200 | 0.80 | 0.04 | Invention Example |
| 321 | B | 120 | 200 | 200 | 200 | 0.79 | 0.02 | Invention Example |
| 322 | B | 130 | 200 | 200 | 200 | 0.78 | 0.03 | Invention Example |
| 323 | B | 140 | 200 | 200 | 200 | 0.84 | 0.02 | Invention Example |
| 324 | B | 150 | 200 | 200 | 200 | 0.83 | 0.03 | Invention Example |
| 325 | B | 100 | 100 | 100 | 100 | 0.97 | 0.07 | Comparative Example |

(continued)

| Condition No. | Slab symbol | Final cold rolling | | | | Iron loss $W_{17/50}$ in sheet width direction | | Remarks |
|---|---|---|---|---|---|---|---|---|
| | | 1st pass | 2nd pass | 3rd pass | 4th pass | Mean value (W/kg) | Difference (W/kg) between maximum and minimum values | |
| 326 | B | 200 | 200 | 200 | 200 | 0.82 | 0.09 | Comparative Example |

Example 4

Steel that contains no inhibitor-forming components and has a composition of components including C: 0.036 mass%, Si: 3.4 mass%, Mn: 0.06 mass%, sol.Al: 0.0072 mass%, N: 0.0050 mass%, S: 0.0031 mass%, Se: 0.0031 mass% as well as the other components including Sb, Cu, P, Cr, Ni, Sn, Nb, Mo, B, and Bi, with the composition presented in Table 6, with the balance being Fe and unavoidable impurities, was melted to form a steel slab. The steel slab was heated to 1210°C and hot-rolled to produce a hot-rolled sheet with a thickness of 2.0 mm. Thereafter, the hot-rolled sheet was subjected to hot-rolled sheet annealing at 1000°C for 60 seconds, followed by cold rolling once (final cold-rolling step) using a tandem rolling mill to form a cold-rolled sheet with a final thickness of 0.20 mm. During tis final cold-rolling step, the flow rate of coolant sprayed to the steel sheet was adjusted to achieve the steel sheet temperature of 250°C to 300°C.

The cold-rolled sheet was subjected to decarburization annealing serving also as primary recrystallization annealing, at a soaking temperature of 850°C for a soaking time of 100 seconds. During a heating process of the decarburization annealing, as in Example 2, rapid heating was performed using a transverse induction heating device at the average heating rate in the temperature range of 500°C to 700°C of 300°C/s, and when the temperature of the steel sheet reached 650°C, the period for the reduced heating rate to 110°C/s at each position in the sheet width direction was set to satisfy the same condition as the condition of No. 1 in Fig. 2. An annealing separating agent mainly composed of MgO was applied to the surface of the steel sheet after the decarburization annealing, followed by finishing annealing to induce secondary recrystallization. Subsequently, an insulation coating solution containing phosphate, chromate, and colloidal silica in a mass ratio of 3:1:2 was applied to the surface of the steel sheet after the finishing annealing. Thereafter, flattening annealing was performed at 800°C for 30 seconds to bake the coating, thereby producing a product sheet.

An Epstein test piece having a width of 30 mm and a length of 280 mm was taken from each of the positions x = 0, 0.2w, 0.4w, 0.6w, and 0.8w in the sheet width direction of the product sheet thus obtained, where x represents the distance (mm) from the center in the sheet width direction and w represents half the sheet width (mm). The iron loss $W_{17/50}$ was measured in accordance with JIS Z 2550 to determine both the mean value of the iron loss across the sheet width and the difference between the maximum and minimum values. Table 6 presents the results, in which the product sheets produced using, as a steel material, a slab containing at least one element selected from the group consisting of Sb, Cu, P, Cr, Ni, Sn, Nb, Mo, B, and Bi, and subjected to heating during the decarburization annealing using a transverse induction heating device under the conditions compliant with the method of the present invention, exhibit a mean iron loss value in the sheet width direction of 0.80 W/kg or less, and the difference between the maximum and minimum values of the iron loss values in the sheet width direction of 0.04 W/kg or less, thereby demonstrating excellent and uniform magnetic properties across the sheet width.

[Table 6]

| Steel symbol | Other steel components (mass%) | | | | | | | | | | Iron loss $W_{17/50}$ in sheet width direction | | Remarks |
| | Sb | Cu | P | Cr | Ni | Sn | Nb | Mo | B | Bi | Mean value (W/kg) | Difference (W/kg) between maximum and minimum values | |
|---|---|---|---|---|---|---|---|---|---|---|---|---|---|
| A | - | - | - | - | - | - | - | - | - | - | 0.84 | 0.04 | Invention Example |
| B | 0.01 | 0.05 | 0.05 | - | - | - | - | - | - | - | 0.80 | 0.02 | Invention Example |
| C | 0.01 | - | - | - | 0.050 | - | 0.005 | - | - | - | 0.80 | 0.02 | Invention Example |
| D | 0.14 | - | - | - | - | - | - | 0.22 | 0.004 | - | 0.80 | 0.04 | Invention Example |
| E | 0.35 | 0.22 | 0.12 | - | - | 0.12 | - | - | - | - | 0.79 | 0.02 | Invention Example |
| F | - | 0.05 | 0.05 | 0.02 | - | - | - | - | - | - | 0.78 | 0.03 | Invention Example |
| G | - | 0.78 | - | - | - | 0.43 | - | 0.37 | - | - | 0.80 | 0.04 | Invention Example |
| H | - | 1.31 | - | 0.27 | 0.420 | - | - | - | - | - | 0.79 | 0.03 | Invention Example |
| I | - | - | 0.30 | - | - | - | 0.002 | - | 0.005 | 0.0020 | 0.78 | 0.01 | Invention Example |
| J | - | - | - | 1.01 | - | - | - | - | - | - | 0.77 | 0.01 | Invention Example |
| K | 0.42 | - | - | 1.31 | 0.890 | - | - | - | - | - | 0.79 | 0.03 | Invention Example |
| L | - | - | - | - | 1.350 | - | - | - | - | - | 0.80 | 0.01 | Invention Example |
| M | - | - | 0.42 | - | 0.007 | - | - | 0.11 | - | 0.0010 | 0.80 | 0.03 | Invention Example |
| N | - | - | - | - | - | - | - | - | - | 0.0007 | 0.80 | 0.03 | Invention Example |
| O | - | - | - | - | 0.050 | 0.02 | 0.005 | - | - | - | 0.79 | 0.03 | Invention Example |
| P | - | - | - | - | - | - | - | 0.02 | 0.002 | 0.0100 | 0.78 | 0.02 | Invention Example |
| Q | - | 0.05 | 0.05 | - | 0.050 | - | - | - | - | - | 0.78 | 0.04 | Invention Example |
| R | - | - | - | - | - | 0.02 | 0.005 | - | - | 0.0100 | 0.77 | 0.03 | Invention Example |
| S | - | - | - | 0.02 | - | - | - | 0.02 | 0.002 | - | 0.80 | 0.04 | Invention Example |
| T | - | 0.05 | - | - | - | 0.02 | - | - | - | 0.0100 | 0.80 | 0.04 | Invention Example |
| U | - | - | - | 0.02 | - | 0.02 | - | 0.02 | - | - | 0.79 | 0.02 | Invention Example |
| V | - | - | 0.05 | - | - | - | - | - | - | - | 0.79 | 0.03 | Invention Example |
| W | - | - | - | - | 0.050 | - | - | - | - | - | 0.80 | 0.03 | Invention Example |
| X | - | - | - | - | - | - | - | - | 0.002 | - | 0.80 | 0.02 | Invention Example |

**Claims**

1. A method for producing a grain-oriented electrical steel sheet, comprising:

   hot-rolling a steel material to form a hot-rolled sheet;
   subjecting the hot-rolled sheet to cold rolling including a single cold rolling step or two or more cold rolling steps with intermediate annealing interposed between each rolling step, to form a cold-rolled sheet with a final thickness; and
   subjecting the cold-rolled sheet to decarburization annealing serving also as primary recrystallization annealing, followed by finishing annealing to induce secondary recrystallization,
   **characterized in that**
   a final cold-rolling step, conducted in either the single cold-rolling step or among the two or more cold-rolling steps, involves at least one rolling pass at a steel sheet temperature within a range of 150°C to 350°C inclusive;
   in the decarburization annealing, an average heating rate T (°C/s) is 250°C/s or greater within a temperature range of 500°C to 700° during heating, and within a selected temperature range between 500°C and 700°, a heating rate at each position across the sheet width is reduced to 150°C/s or less for a period t (s) that satisfies Expression (1) below, in accordance with a value of x/w of the position:

$$200/T \times 0.2(1\text{-}x/w) \leq t \leq 200/T \times 0.8(1\text{-}x/w) \ ...(1),$$

   provided that x represents a distance (mm) from a center in the sheet width direction, and w represents 1/2 of the sheet width (mm), where $0 \leq x \leq 0.9w$.

2. The method for producing a grain-oriented electrical steel sheet according to claim 1, wherein
   the final cold-rolling step comprises performing at least one rolling pass within a temperature range of 30°C to 130°C inclusive, followed by at least one rolling pass within a temperature range of 150°C to 350°C inclusive.

3. The method for producing a grain-oriented electrical steel sheet according to claim 1 or 2, wherein
   the steel material has a composition of components comprising C: 0.01 to 0.10 mass%, Si: 2.0 to 4.5 mass%, Mn: 0.01 to 0.50 mass%, Al: 0.0100 to 0.0400 mass%, and N: 0.0050 to 0.0120 mass%, and further comprising at least one of S and Se in a total amount of 0.01 to 0.05 mass%, with a balance being Fe and unavoidable impurities.

4. The method for producing a grain-oriented electrical steel sheet according to claim 1 or 2, wherein
   the steel material has a composition of components comprising C: 0.01 to 0.10 mass%, Si: 2.0 to 4.5 mass%, Mn: 0.01 to 0.50 mass%, Al: less than 0.0100 mass%, N: 0.0050 mass% or less, S: less than 0.0100 mass%, and Se: less than 0.0100 mass%, with a balance being Fe and unavoidable impurities.

5. The method for producing a grain-oriented electrical steel sheet according to claim 3 or 4, wherein
   the steel material further includes, in addition to the composition of components, at least one component selected from the group consisting of Sb: 0.005 to 0.500 mass%, Cu: 0.01 to 1.50 mass%, P: 0.005 to 0.500 mass%, Cr: 0.01 to 1.50 mass%, Ni: 0.005 to 1.500 mass%, Sn: 0.01 to 0.50 mass%, Nb: 0.0005 to 0.0100 mass%, Mo: 0.01 to 0.50 mass%, B: 0.0010 to 0.0070 mass%, and Bi: 0.0005 to 0.0500 mass%.

6. The method for producing a grain-oriented electrical steel sheet according to any one of claims 1 to 5, wherein
   rapid heating in the decarburization annealing is performed using a transverse induction heating device.

7. A transverse induction heating device for use in rapid heating of the decarburization annealing in the method for producing a grain-oriented electrical steel sheet according to any one of claims 1 to 5.

Fig. 1

Fig. 2

Fig. 3

Traveling direction
of steel sheet

Steel sheet

Iron core

Transverse induction
heating device

Heating coil

Steel sheet

## INTERNATIONAL SEARCH REPORT

| International application No. |
|---|
| **PCT/JP2024/022732** |

**A. CLASSIFICATION OF SUBJECT MATTER**

*C21D 9/46*(2006.01)i; *C21D 8/12*(2006.01)i; *C22C 38/00*(2006.01)i; *C22C 38/60*(2006.01)i; *H01F 1/16*(2006.01)i; *H01F 1/147*(2006.01)i

FI: C21D9/46 501A; C21D8/12 B; C22C38/00 303U; C22C38/60; H01F1/147 175; H01F1/16

According to International Patent Classification (IPC) or to both national classification and IPC

**B. FIELDS SEARCHED**

Minimum documentation searched (classification system followed by classification symbols)

C21D9/46; C21D8/12; C22C38/00-38/60; H01F1/16; H01F1/147

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2020-84303 A (JFE STEEL CORPORATION) 04 June 2020 (2020-06-04) | 1-7 |
| A | JP 2019-167568 A (NIPPON STEEL CORPORATION) 03 October 2019 (2019-10-03) | 1-7 |
| A | JP 2019-178378 A (NIPPON STEEL CORPORATION) 17 October 2019 (2019-10-17) | 1-7 |
| A | JP 2008-1979 A (NIPPON STEEL CORPORATION) 10 January 2008 (2008-01-10) | 1-7 |
| A | JP 2014-47411 A (JFE STEEL CORPORATION) 17 March 2014 (2014-03-17) | 1-7 |
| P, A | WO 2024/053627 A1 (JFE STEEL CORPORATION) 14 March 2024 (2024-03-14) | 1-7 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **29 August 2024** | **10 September 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
Information on patent family members

International application No.

**PCT/JP2024/022732**

| Patent document cited in search report | | | Publication date (day/month/year) | Patent family member(s) | | | Publication date (day/month/year) |
|---|---|---|---|---|---|---|---|
| JP | 2020-84303 | A | 04 June 2020 | (Family: none) | | | |
| JP | 2019-167568 | A | 03 October 2019 | (Family: none) | | | |
| JP | 2019-178378 | A | 17 October 2019 | (Family: none) | | | |
| JP | 2008-1979 | A | 10 January 2008 | (Family: none) | | | |
| JP | 2014-47411 | A | 17 March 2014 | US | 2015/0211089 | A1 | |
| | | | | WO | 2014/034931 | A1 | |
| | | | | EP | 2894232 | A1 | |
| | | | | CA | 2883406 | A1 | |
| | | | | KR | 10-2015-0029029 | A | |
| | | | | CN | 104603298 | A | |
| | | | | MX | 2015002539 | A | |
| | | | | RU | 2015112141 | A | |
| | | | | BR | 112015003316 | A2 | |
| | | | | IN | 1613DEN2015 | A | |
| | | | | CN | 109112287 | A | |
| WO | 2024/053627 | A1 | 14 March 2024 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S50016610 A
- JP H08253816 A
- JP H01215925 A
- JP H04160114 A
- JP 2014152393 A
- JP 50079442 A
- JP 48039338 A
- JP 56075579 A